# EUROPEAN PATENT SPECIFICATION

(11) **EP 3 236 219 B1**
(45) Date of publication and mention of the grant of the patent: **27.11.2019**
(21) Application number: 16872714.7
(22) Date of filing: 20.10.2016
(51) Int. Cl.: G01G 19/10, B60G 17/00, B60G 17/018, B60G 17/019, B60G 15/06

(54) **VEHICLE WEIGHT MEASUREMENT DEVICE**
VORRICHTUNG ZUR MESSUNG DES GEWICHTS EINES FAHRZEUGS
DISPOSITIF DE MESURE DU POIDS D'UN VÉHICULE

(30) Priority: 10.12.2015 JP 2015241305; 10.12.2015 JP 2015241306; 10.12.2015 JP 2015241307; 25.12.2015 JP 2015253915; 06.06.2016 JP 2016112870
(43) Date of publication of application: 25.10.2017
(73) Proprietor: NSK Ltd., Tokyo 141-8560 (JP)
(72) Inventor: YAMAMOTO, Shin, Fujisawa-shi Kanagawa 251-8501 (JP); MATSUDA, Yasuyuki, Fujisawa-shi Kanagawa 251-8501 (JP); HIKIDA, Masafumi, Fujisawa-shi Kanagawa 251-8501 (JP); SODA, Fumiaki, Fujisawa-shi Kanagawa 251-8501 (JP); KAWAHARA, Hiroshi, Fujisawa-shi Kanagawa 251-8501 (JP)
(74) Representative: Grünecker Patent- und Rechtsanwälte PartG mbB
(86) International application number: PCT/JP2016/081079
(87) International publication number: WO 2017/098814

(56) References cited:
- EP-A1- 0 392 071
- EP-A1- 0 415 808
- WO-A1-2015/159899
- WO-A1-2015/159899
- DE-A1- 3 224 295
- JP-A- H0 599 762
- JP-A- H03 182 824
- JP-A- 2004 314 707
- JP-U- S58 136 807

## Description

### TECHNICAL FIELD

The present invention relates to a vehicle weight measurement device, and particularly to, a vehicle weight measurement device to be incorporated to a suspension device of an automobile and configured to detect an overloading.

### RELATED ART

In an automobile, particularly, a commercial vehicle such as a truck, a van and the like for transporting a variety of goods, an illegal overloaded vehicle that travels on a road with exceeding legal load capacity becomes a social issue. The reason for the overloading is that it is possible to save the transportation cost when carrying many goods at one time.

However, the overloading should be avoided because it can cause a variety of problems, as follows.
(1) The overloading may deteriorate motion performance of the automobile and damage constitutional components, which may cause an accident. For example, an axle (hub) is broken, a tire is damaged (burst), a braking distance increases, a brake is overheated and poorly operates, and a vehicle is likely to overturn. That is, an accident may be caused.
(2) Since the overloading causes severe damage to the road, the maintenance cost of the road increases.

There are many causes that it is difficult to prevent the overloading. One of them is that a driver, a passenger and the like cannot easily recognize the loaded weight.

That is, in the related art, a vehicle to be measured is put on a platform scale so as to measure load of the vehicle (to measure loaded weight). However, the installation of the platform scale requires a large facility and a wide installation space, so that the installation cost increases. Therefore, the number of platform scales to be installed is limited, so that it is physically difficult to measure many vehicles.

Therefore, in recent years, a simple load measurement device configured to be mounted on a vehicle itself and to measure the load thereof has been suggested, as disclosed in Patent Document 1.

For example, the technology disclosed in Patent Document 1 is a simple load measurement device including a base assembly of which two weld parts are welded to different mounting places of a loaded member configured to expand and contract as vehicle load is applied thereto, a sensor element for compression strain detection which is supported by the base assembly and of which an output changes as the load to be applied to the vehicle changes, the base assembly expands and contracts in a direction in which the two weld parts come close to and separate from each other, and a circuit board mounted thereon with an amplifier configured to amplify the output of the sensor device for compression strain detection, wherein the load measurement device is configured to measure load by detecting the compression strain.

However, according to the load measurement device of the related art like Patent Document 1, since the configuration is complicated and it is necessary to provide the circuit board, the amplifier and the like, the cost increases. Also, since the load measurement device is disposed at a place at which it is likely to be shocked, a problem may be caused to the circuit board, the amplifier and the like.

The document EP 0 392 071 A1, which shows the preamble of claim 1, discloses another vehicle weight measurement device.

### Citation List

### Patent Documents

Patent Document 1: Japanese Patent Application publication No. 2001-330503A

### SUMMARY

### Problems To Be Solved

The present invention has been made to solve the above problems, and an object thereof is to provide a vehicle weight measurement device configured to detect load in a compression direction and having a simple, inexpensive and durable structure, thereby configuring a unit for preventing overloading of a vehicle.

### Means For Solving the Problems

The above object is achieved by a vehicle weight measurement device according to the appended claims.

### Effects of the Invention

According to the present invention, it is possible to provide a load sensor-equipped bearing device configured to detect load in a compression direction and having a simple, inexpensive and durable structure, thereby preventing overloading of a vehicle.

### BRIEF DESCRIPTION OF THE DRAWINGS

FIG. 1 is a longitudinal sectional view depicting a state where a vehicle weight measurement device of a first embodiment of the present invention is incorporated to a suspension device.
FIG. 2 is a schematic exploded perspective view depicting the first embodiment of FIG. 1.
FIG. 3 is a longitudinal sectional view depicting an embodiment of the vehicle weight measurement device of the first embodiment.
FIG. 4 is a partially enlarged sectional view depicting main parts of the vehicle weight measurement device shown in FIG. 3.
FIG. 5 is a schematic perspective view of an inner collar configuring the first embodiment.
FIG. 6 is a schematic perspective view depicting another embodiment of the inner collar.
FIG. 7 is a schematic partial sectional view depicting a load transmission path of the present invention.
FIGS. 8A and 8B depicts a second embodiment of the vehicle weight measurement device of the present invention, in which FIG. 8A is a schematic perspective view of a piston configuring the second embodiment and FIG. 8B is a partially enlarged sectional view depicting a lubricant holding part.
FIG. 9 is a longitudinal sectional view depicting a state where a vehicle weight measurement device of a third embodiment of the present invention is incorporated to the suspension device.
FIG. 10 is a schematic exploded perspective view depicting the third embodiment of FIG. 9.
FIG. 11 is a longitudinal sectional view depicting an embodiment of the vehicle weight measurement device of the third embodiment.
FIG. 12 is a partially enlarged sectional view depicting main parts of the vehicle weight measurement device shown in FIG. 11.
FIG. 13 is a schematic perspective view of an inner collar configuring the third embodiment.
FIG. 14 is a schematic perspective view depicting another embodiment of the inner collar.
FIGS. 15A and 15B depict a fourth embodiment of the vehicle weight measurement device of the present invention, in which FIG. 15A is a schematic perspective view of a bearing outer ring configuring a piston of the fourth embodiment and FIG. 15B is a partially enlarged sectional view depicting the lubricant holding part.
FIGS. 16A and 16B depict another embodiment of the bearing outer ring, in which FIG. 16A is a schematic perspective view of the bearing outer ring and FIG. 16B is a partially enlarged sectional view depicting the lubricant holding part.
FIG. 17 relates to a fifth embodiment of the vehicle weight measurement device of the present invention and is a partially enlarged sectional view depicting the lubricant holding part.
FIG. 18 is a schematic partial perspective view depicting an inner collar and a piston configuring a sixth embodiment of the vehicle weight measurement device of the present invention.
FIG. 19 is a partially enlarged sectional view depicting a lubricant holding part of the sixth embodiment.
FIG. 20 is a longitudinal side view depicting a state where a vehicle weight measurement device of a seventh embodiment of the present invention is incorporated to the suspension device.
FIG. 21 is a schematic exploded perspective view of the seventh embodiment.
FIG. 22 is a longitudinal sectional view depicting the vehicle weight measurement device of the seventh embodiment.
FIG. 23 is a schematic perspective view depicting a pad of the seventh embodiment, which is formed in an annular shape and has one line of a groove continuing in a circumferential direction.
FIG. 24 is a partially enlarged sectional view depicting main parts of the pad and the diaphragm of the vehicle weight measurement device of the seventh embodiment shown in FIG. 22.
FIG. 25 relates to a modified embodiment of the pad of the seventh embodiment and is a schematic perspective view depicting a pad formed in an annular shape and having two lines of grooves continuing in the circumferential direction.
FIGS. 26A to 26C depict another modified embodiment of the pad of the seventh embodiment, in which FIG. 26A is a schematic perspective view depicting a pad formed in an annular shape and having circumferential grooves intermittent in the circumferential direction, FIG. 26B is a schematic perspective view depicting a pad formed in an annular shape and having two lines of circumferential grooves intermittent in the circumferential direction, and FIG. 26C is a schematic perspective view depicting a pad formed in an annular shape and having round holes arranged in the circumferential direction.

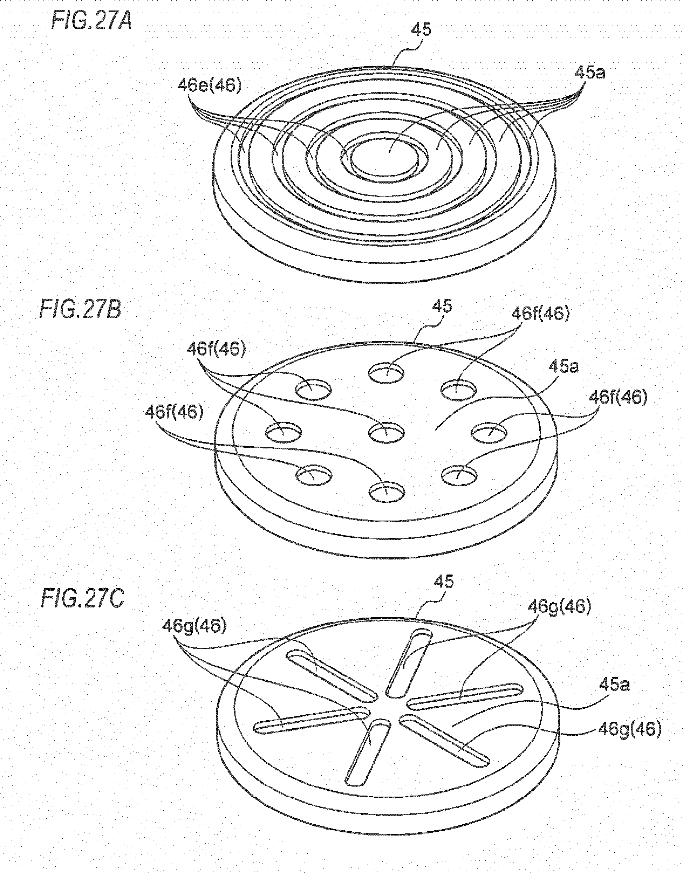

FIGS. 27A to 27C relates to an eighth embodiment of the vehicle weight measurement device of the present invention and is a schematic perspective view depicting other embodiments of the pad, in which FIG. 27A is a schematic perspective view depicting a pad formed in a circular disc shape and having circumferential grooves continuing in the circumferential direction, FIG. 27B is a schematic perspective view depicting a pad formed in a circular disc shape and having round holes arranged in the circumferential direction, and FIG. 27C is a schematic perspective view depicting a pad formed in a circular disc shape and having grooves arranged in a radial shape.

### DETAILED DESCRIPTION OF THE ENBODIMENTS

Hereinafter, embodiments of a vehicle weight measurement device of the present invention will be described with reference to the drawings.

The embodiments relate to an example where the vehicle weight measurement device of the present invention is used for a suspension device (suspension) 1 of an automobile. In the meantime, the embodiments are just embodiments of the present invention, are not construed to limit the present invention and can be design-changed within the scope of the present invention.

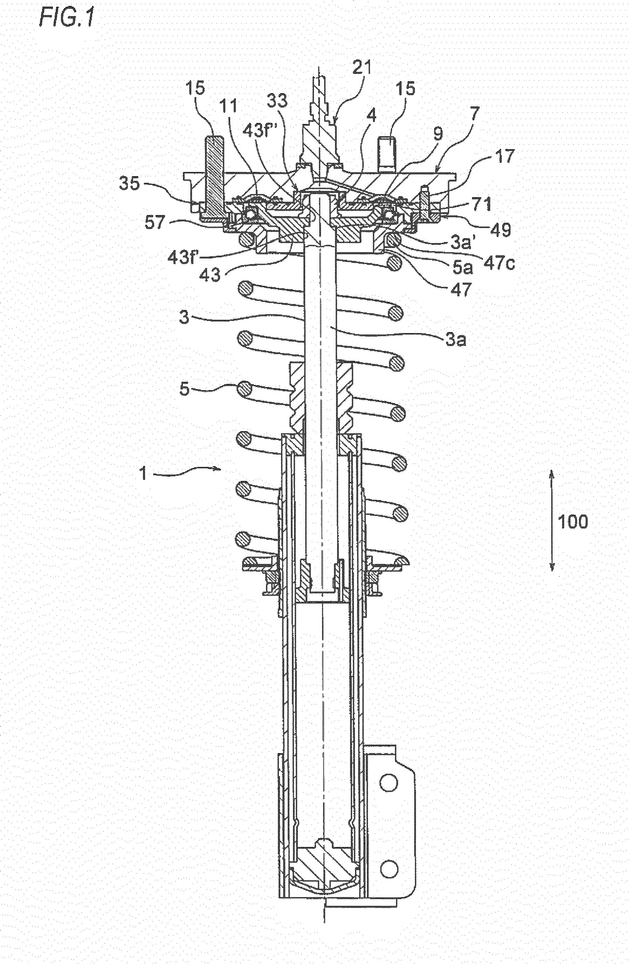

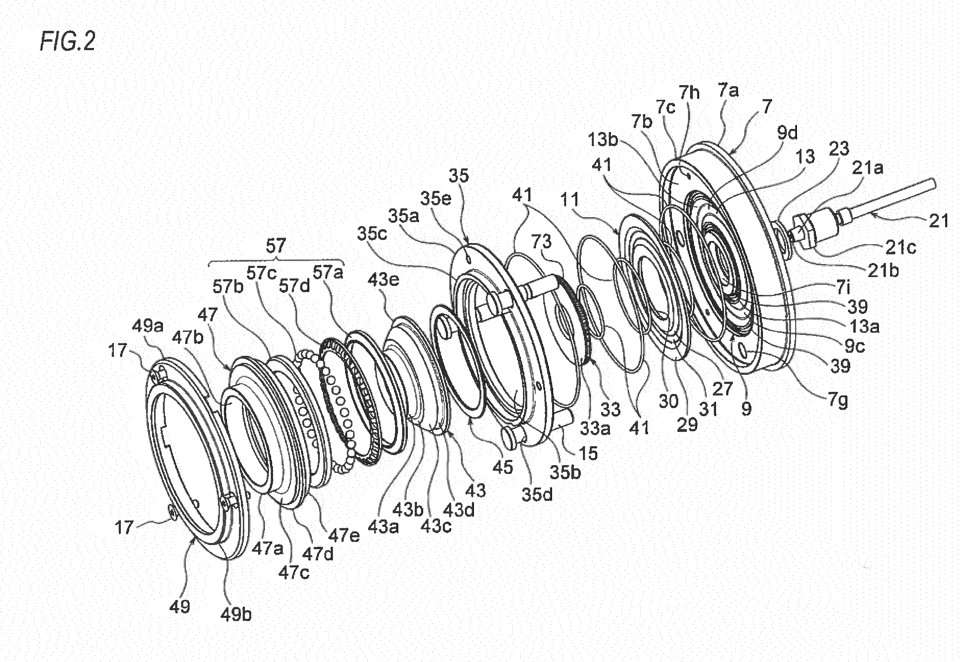

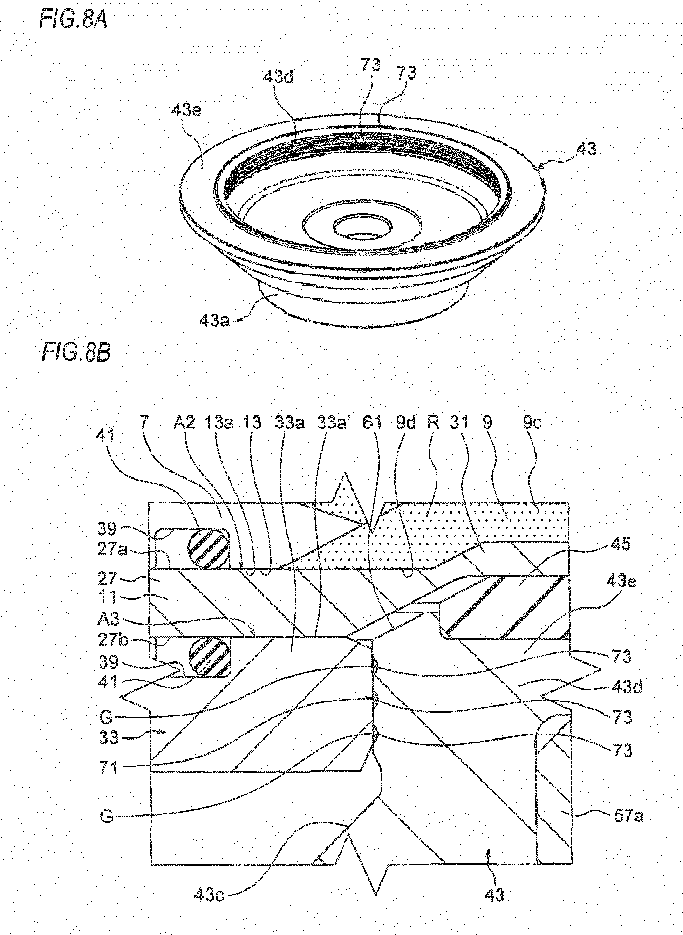

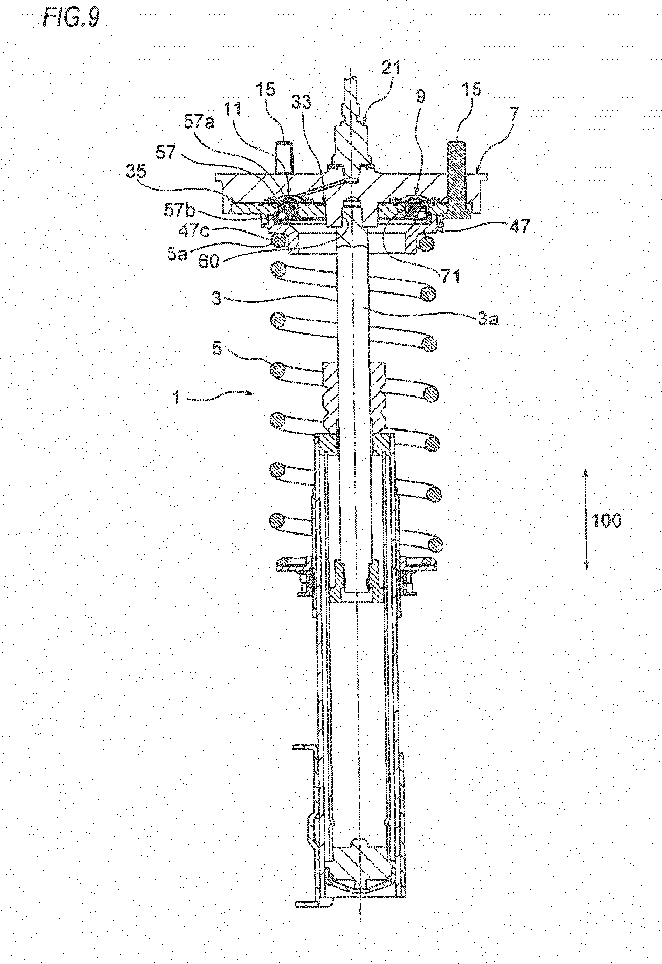

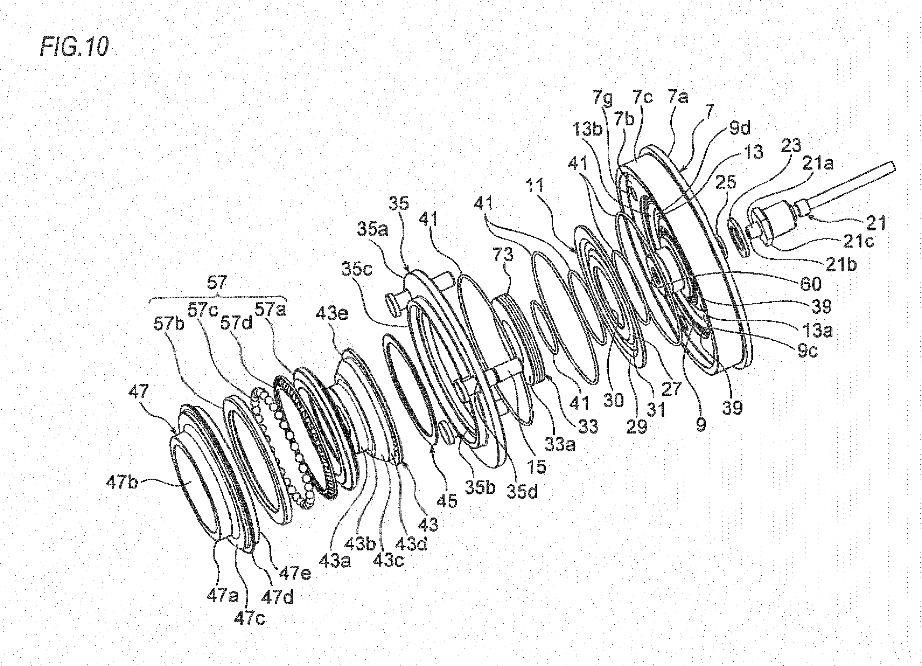

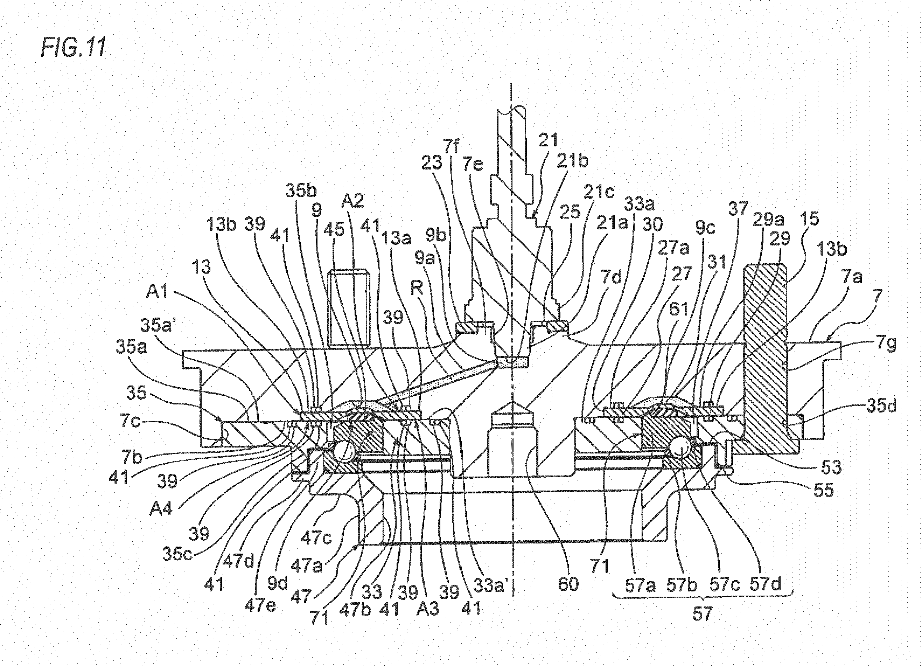

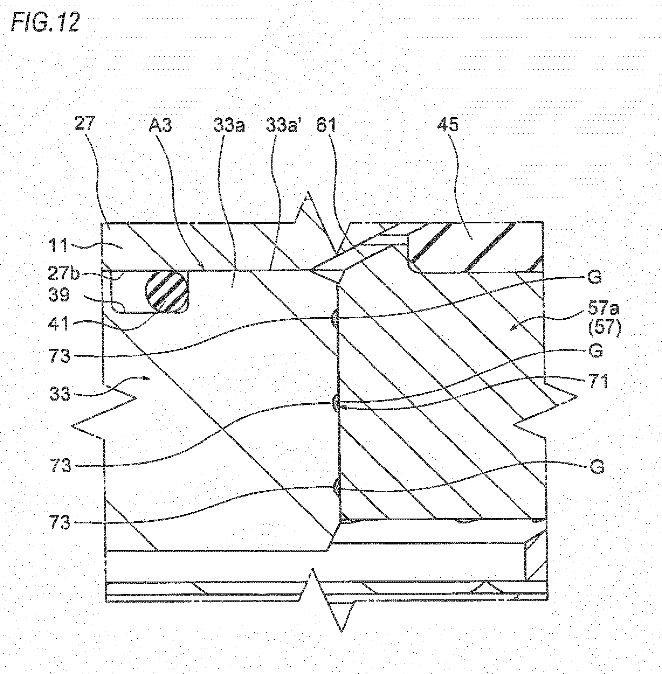

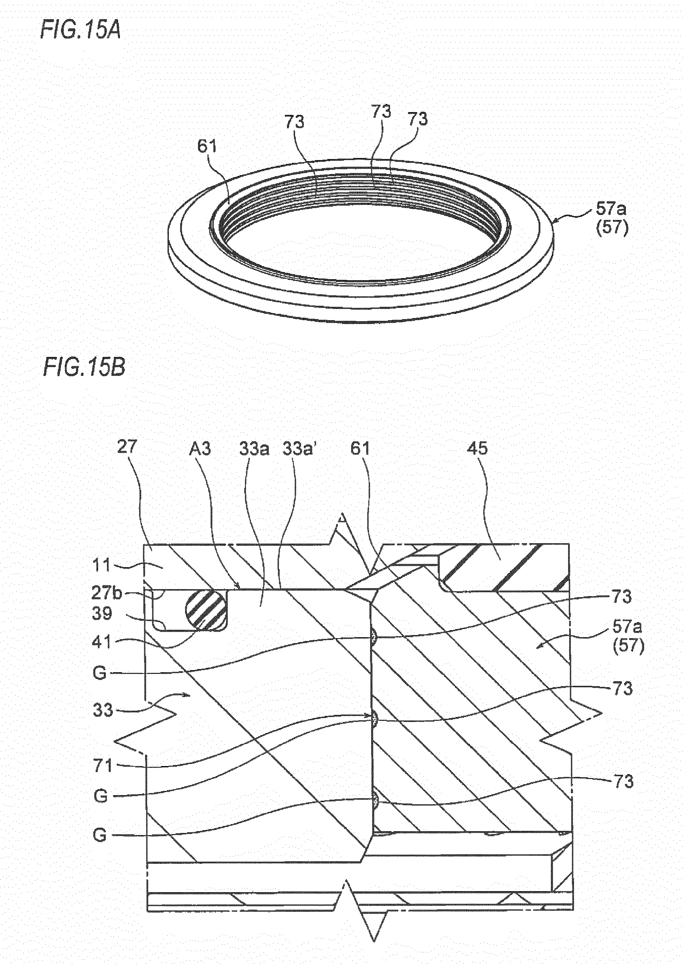

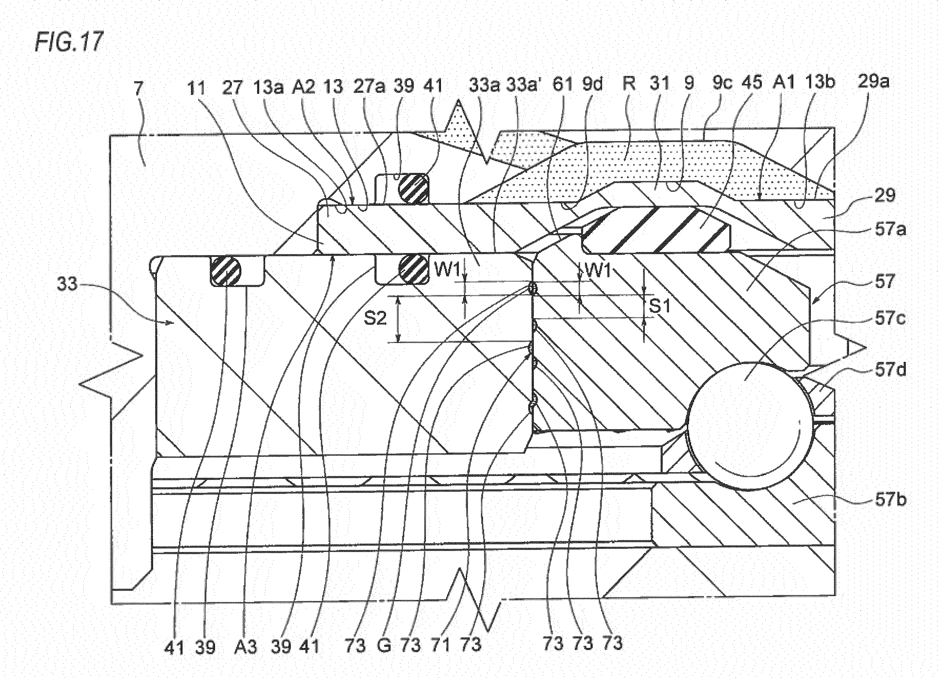

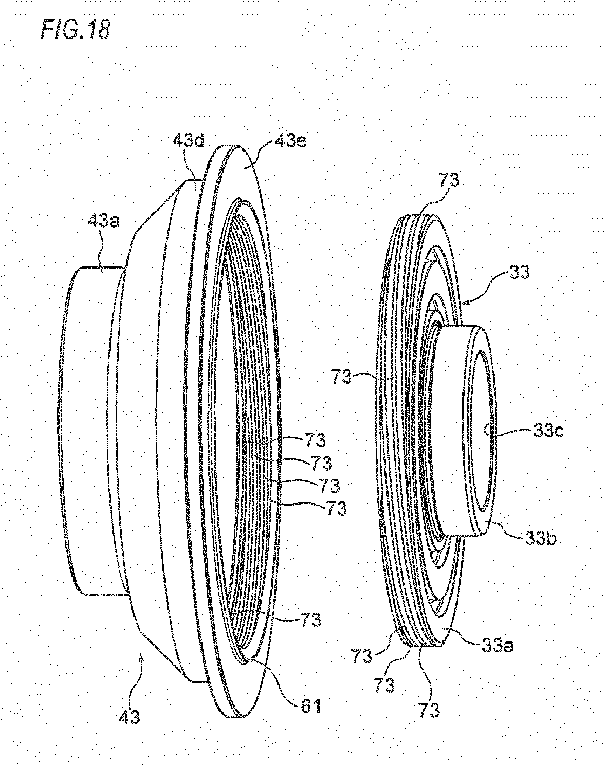

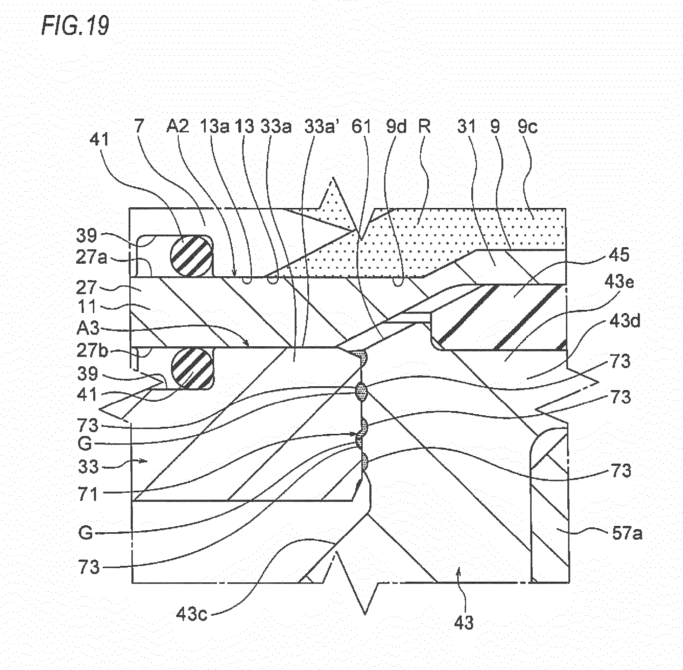

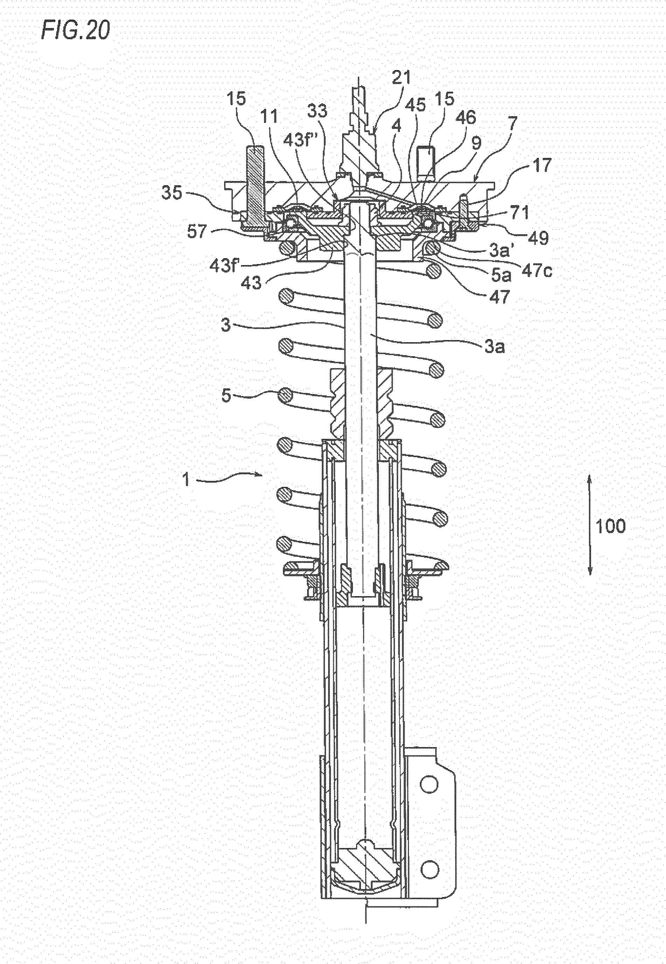

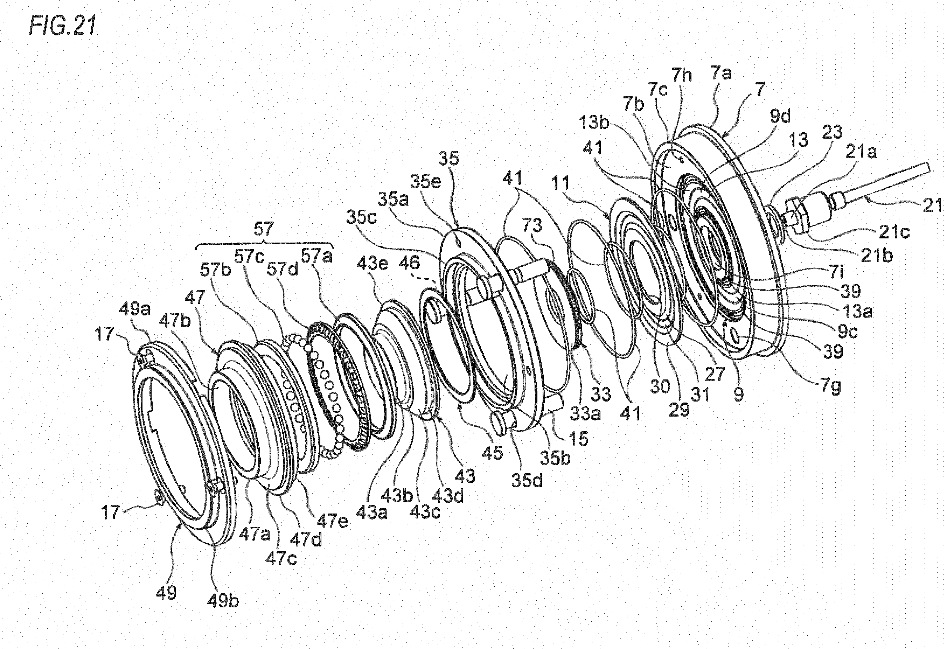

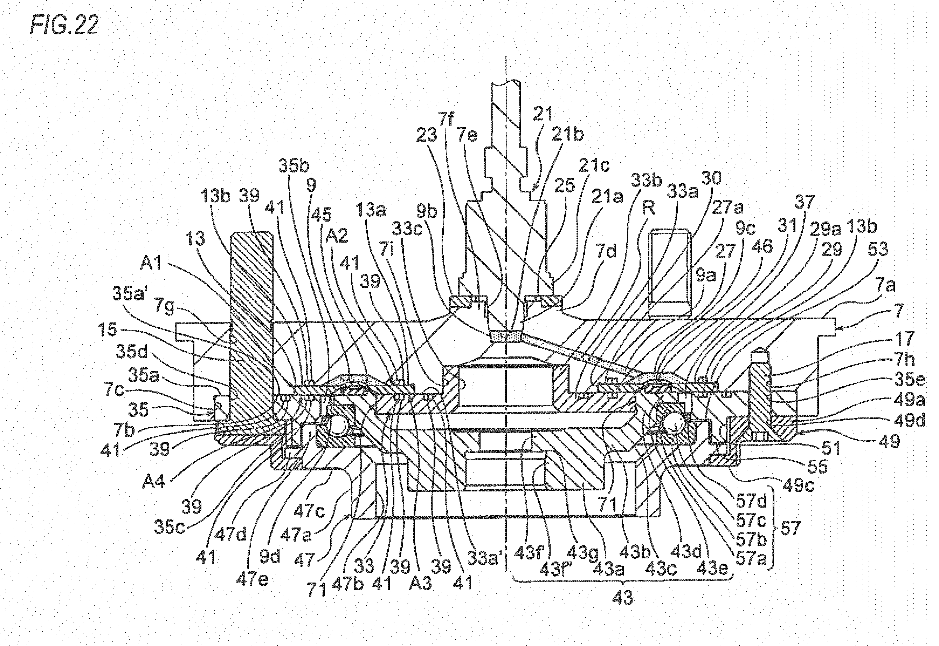

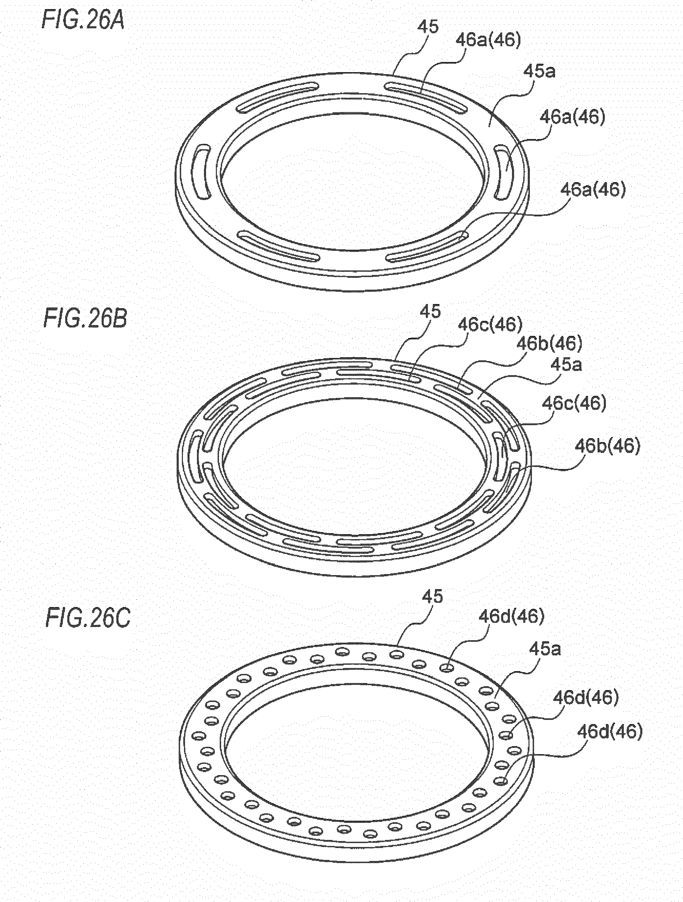

FIGS. 1 to 7 depict a first embodiment the vehicle weight measurement device of the present invention, FIGS. 8A and 8B depict a second embodiment, FIGS. 9 to 14 depict a third embodiment, FIGS. 15A to 16B depict a fourth embodiment, FIG. 17 depicts a fifth embodiment, FIGS. 18 and 19 depict a sixth embodiment, FIGS. 20 to 25 depict a seventh embodiment, and FIGS. 26A to 27C depict an eighth embodiment.

Although not shown, an upper side of the suspension device (suspension) 1 is fixed to a main body frame (cross member) of an automobile via a mounting part (top plate) 7, and a lower side thereof is fixed to an axle via a lower arm pivoted to a frame, for example.

In the meantime, the suspension device 1 shown in FIGS. 1 and 9 has a well-known configuration, except that the vehicle weight measurement device of the present invention is incorporated thereto, is not construed to be limited to the shown examples and can be design-changed within the scope of the present invention.

In FIGS. 1 and 9, a reference numeral 3 indicates a shock absorber and a reference numeral 5 indicates a coil spring. In the below, the vehicle weight measurement device, which is the feature of the present invention, will be described and the description of the other configurations of the suspension device will be omitted.

### "First Embodiment"

The vehicle weight measurement device includes a mounting part (top plate) 7 fixed to a vehicle-side, an inner collar 33 and an outer collar 35 provided on a lower surface 7b of the mounting part 7, a diaphragm 11 sandwiched and fixed by the mounting part 7, a piston 43 in contact with the diaphragm 11 and configured to press the diaphragm 11 in a perpendicular direction (a direction denoted with an arrow 100 in the drawings), a bush 47 configured to receive one end (upper end) of the coil spring 5 of the suspension device 1, a bearing device 57 interposed between the piston 43 and the bush 47, an oil chamber 9 formed between the mounting part 7 and the diaphragm 11 and having a predetermined fluid to be measured (operating oil) R filled therein, a pressure sensor 21 provided on an upper surface 7a of the mounting part 7 and configured to detect a change in pressure of the fluid to be measured R filled in the oil chamber 9 and a lubricant holding part 71 formed in a sliding contact area between the piston 43 and the inner collar 33 (refer to FIGS. 1 to 3).

The mounting part (top plate) 7 is formed to have a short cylindrical shape having a predetermined thickness, and has the upper surface 7a fixed to the vehicle-side, the lower surface 7b formed with a groove portion 9c opening in an annular shape and an annular wall part 7c protruding in a thin cylindrical shape downwards from an outer periphery end in the perpendicular direction.

The groove portion 9c has a dome shape, as seen from a section, facing towards the upper surface 7a of the mounting part 7 in a diaphragm accommodating concave portion 13 provided in an annular shape on the lower surface 7b of the mounting part 7.

The diaphragm accommodating concave portion 13 has an inner surface part 13a formed in an annular shape having a predetermined width at an inner diameter-side of the groove portion 9c and an outer surface part 13b formed in an annular shape having a predetermined width at an outer diameter-side of the groove portion 9c.

The upper surface 7a of the mounting part 7 facing towards the vehicle-side is formed with a sensor coupling part 7d to which the pressure sensor 21 can be coupled.

Also, the mounting part 7 is provided at an inner side with a communication path 9a configured to communicate with the groove portion 9c at one or more places and to face towards the sensor coupling part 7d.

The sensor coupling part 7d has a cylindrical insertion part 7f configured to receive a cylindrical detection part 21a provided at a tip end of the pressure sensor 21 and to have a concave shape facing towards an inner side from an upper surface, and an insertion port 7e opening and protruding in a cylindrical shape upwards in the perpendicular direction. Also, a bottom area of the insertion part 7f is formed with a fluid reservoir part 9b configured to communicate with the communication path 9a.

In the meantime, the sensor coupling part 7d and the pressure sensor 21 are necessarily required to be connected so that the fluid to be measured R does not leak.

The mounting part 7 is provided with a plurality of bolt insertion holes 7g in which bolts 15 are to be inserted so as to fasten and fix the same to a main body frame (for example, a cross member) of the automobile, and a plurality of bolt fixing holes 7h in which coupling bolts 17 are to be fastened so as to fix a stopper, which will be described later.

Also, the lower surface 7b of the mounting part 7 is formed at its central area with a fitting hole 7i to which a cylindrical protrusion 33b of the inner collar 33 is to be fitted.

The pressure sensor 21 is configured to detect a change in pressure of the fluid to be measured R filled in the oil chamber 9. For example, a well-known structure configured to measure a pressure, to convert the pressure into a voltage signal and to transmit the same is appropriately selected and used within the scope of the present invention. That is, the pressure sensor is not particularly limited and an optimal sensor can be appropriately selected within the scope of the present invention.

In the first embodiment, the detection part 21a is inserted into the sensor coupling part 7d, a tip end detection surface 21b is arranged to face towards an inside of the oil chamber 9, and a butting flange surface part 21c is configured to stand up in the perpendicular direction with being closely contacted to an opening edge of the sensor coupling part 7d.

In the first embodiment, a washer 23 is interposed and fixed between the butting flange surface part 21c and the opening edge portion. Also, in order to prevent the fluid to be measured from being leaked, a predetermined sealing member, in the first embodiment, an O-ring 25 is arranged.

In the meantime, the pressure sensor 21 is not necessarily required to be disposed at the center of the upper surface 7a of the mounting part 7. For example, it may be arranged with the sensor coupling part 7d being provided at an arbitrary position of the upper surface 7a of the mounting part 7. That is, the pressure sensor can be arranged at a position at which a problem is not to be caused upon the mounting to the vehicle body-side.

The diaphragm 11 is formed in an annular shape configured to cover an opening area 9d of the groove portion 9c and to form the oil chamber 9 of a predetermined space together with the groove portion 9c, and is fitted in the annular diaphragm accommodating concave portion 13 formed on the lower surface 7b of the mounting part 7.

For example, in the first embodiment, the diaphragm 11 is formed with a first sealing area 27 and a second sealing area 29 each of which is thick and has an annular shape at an inner diameter-side and an outer diameter-side, respectively, and an annular pressing area 31 configured to be thinly coupled and deformable between the first sealing area 27 and the second sealing area 29 is provided. In the drawings, a reference numeral 30 indicates an insertion hole formed at a center of the diaphragm.

The pressing area 31 is configured to have a width capable of covering the opening area 9d of the groove portion 9c, and the oil chamber 9 of a predetermined area is formed by the pressing area 31 and the groove portion 9c (including the communication path 9a and the fluid reservoir part 9b) of the mounting part 7.

The first sealing area 27 and the second sealing area 29 are formed thicker than a depth of the diaphragm accommodating concave portion 13 in the perpendicular direction, and are configured to have thicknesses so that they can be compressed and sealed when they are sandwiched by the inner collar 33 and the outer collar 35.

A material of the diaphragm 11 is a material having flexibility and durability (cold resistance/wear resistance/oil resistance) and is not particularly limited. However, for example, nitrile rubber/Teflon (registered trademark)/chloroprene rubber/fluorine rubber/ethylenepropylene rubber or the like may be used, depending on a characteristic of the fluid.

Also, a diaphragm made of metal such as thin stainless steel can be used, which is within the scope of the present invention.

The oil chamber 9 is fully hermetically filled with the predetermined fluid to be measured R without generating air bubbles. A pressure of the fluid to be measured R, which is to be applied by movement of the piston 43, can be changed.

In the first embodiment, the inner collar 33 has a main body part 33a formed to have a predetermined short cylindrical shape and having a thickness in the perpendicular direction so that it can enter an area surrounded by the annular wall part 7c of the mounting part 7, and a cylindrical protrusion 33b configured to stand up in a small-diameter cylindrical shape at a center of an upper surface of the main body part 33a.

The cylindrical protrusion 33b has an outer diameter that can be fitted to the fitting hole 7i formed at the center of the lower surface 7b of the mounting part 7, and is formed with an accommodation hole 33c in which a tip end of a rod 3a of the shock absorber 3 configuring the suspension device 1 and a nut 4 to be fixed to the tip end of the rod 3a can be accommodated.

The main body part 33a is formed to have a size so that it faces the inner surface part 13a of the diaphragm accommodating concave portion 13 when the main body part 33a is arranged with the cylindrical protrusion 33b being fitted to the fitting hole 7i of the mounting part 7.

The first sealing area 27 of the diaphragm 11 is hermetically fixed with being sandwiched between an upper surface 33a' of the main body part 33a and a surface part (the inner surface part 13a of the diaphragm accommodating concave portion 13) of the lower surface 7b of the mounting part 7 located at an inner side relative to the opening area 9d.

In the first embodiment, the outer collar 35 has a main body part 35a formed to have a predetermined short cylindrical shape and having a thickness in the perpendicular direction so that it can enter the area surrounded by the annular wall part 7c of the mounting part 7, an insertion hole 35b formed at a center of the main body part 35a and a cylindrical hanging part 35c configured to hang down in a cylindrical shape from a lower surface of the main body part 35a at a position slightly deviating from the insertion hole 35b in an outer diameter direction.

The main body part 35a is formed to have an outer diameter that can be fitted to an inner peripheral surface of the annular wall part 7c of the mounting part 7, and an inner diameter facing the outer surface part 13b of the diaphragm accommodating concave portion 13.

The second sealing area 29 of the diaphragm 11 is hermetically fixed with being sandwiched between an upper surface 35a of the main body part 35a and a surface part (the outer surface part 13b of the diaphragm accommodating concave portion 13) of the lower surface 7b of the mounting part 7 located at an outer side relative to the opening area 9d.

Also, in the first embodiment, the same number of bolt insertion holes (large diameter) 35d having the same diameter is provided coaxially with the bolt insertion holes 7g of the mounting part 7 in the perpendicular direction, and the same number of bolt insertion holes (small diameter) 35e having the same diameter as the bolt fixing holes 7h for fastening and fixing the stopper is provided.

The cylindrical hanging part 35c is formed to have a length in the perpendicular direction and an outer diameter and an inner diameter so that it can be arranged between the bush 47 and the stopper, which will be described later.

Therefore, in the first embodiment, an annular gap 37 facing the groove portion 9c having a substantial dome shape is formed between an outer diameter of the main body part 33a of the inner collar 33 and the inner diameter of the main body part 35a of the outer collar 35, and the piston 43 (which will be described later) is arranged to face the gap 37.

In the first embodiment, hermetical fixing areas A1, A2 between the upper surface part 27a of the first sealing area 27 and the upper surface part 29a of the second scaling area 29 of the diaphragm 11 and the lower surface (the inner surface part 13a and outer surface part 13b of the diaphragm accommodating concave portion 13) of the mounting part 7, a hermetical fixing area A3 between the lower surface part 27b of the first sealing area 27 of the diaphragm 11 and the upper surface 33a' of the inner collar 33, and a hermetical fixing area A4 between a lower surface part 29b of the second sealing area 29 and the upper surface 35a' of the outer collar 35 adopt a sealing structure by a surface seal, respectively.

Also, a sealing structure by a separate seal member is adopted, in addition to the sealing structures of the surface seals.

In the first embodiment, the inner surface part 13a and outer surface part 13b of the diaphragm accommodating concave portion 13 are respectively provided with two different annular seal grooves 39 having large and small diameters, and O-rings 41 are inserted in the seal grooves 39, so that the O-rings 41 are compressed and seal between the inner surface part and outer surface part and the upper surface part 27a of the first sealing area 27 and the upper surface part 29a of the second sealing area 29, respectively.

In the first embodiment, the upper surface 33a' of the inner collar 33 and the upper surface 35a' of the outer collar 35 are respectively provided with two different annular seal grooves 39 having large and small diameters, and O-rings 41 are inserted in the seal grooves 39, so that the O-rings 41 are compressed and seal between the inner collar and the lower surface part 27b of the first sealing area 27 and lower surface part 29b of the second sealing area 29 and between the outer collar and the lower surface 7b of the mounting part 7.

Since the O-rings 41 are compressed and seal between the upper surface part 27a of the first sealing area 27 and the upper surface part 29a of the second sealing area 29, it is possible to sufficiently prevent the fluid to be measured R from being leaked from the oil chamber 9. However, according to the first embodiment, since the severalfold sealing structures are adopted, as described above, even though the fluid to be measured R is leaked from the sealing structures of the first sealing area 27 and the second sealing area 29, the fluid to be measured R can be prevented from being leaked by the other sealing structures, so that it is possible to securely prevent the fluid to be measured R from being leaked from the oil chamber 9. Therefore, it is possible to extremely improve the sealing reliability.

Also, in the first embodiment, since the sealing structures are provided in the areas in which the relative movement is not to occur, the seal durability is also high.

Each seal member may have any configuration where one member configuring the sealing and fixing area and the contact area is provided with the seal groove 39 and the O-ring 41 is inserted in the seal groove 39, so that the O-ring 41 is compressed and seal between the one member and the other member. That is, the present invention is not limited to the configuration as to whether the seal groove 39 and the O-ring 41 are provided at one member or the other member, and any of the configurations is included within the scope of the present invention.

In the first embodiment, the piston 43 has a cylindrical part 43a having a diameter smaller than the outer diameter of the main body part 33a of the inner collar 33, a flange part 43b having a diameter smaller than the outer diameter of the main body part 33a of the inner collar 33 and integrally extending in a horizontal direction from an upper end edge of the cylindrical part 43a, a tapered cylindrical part 43c integrally extending upwards in the perpendicular direction in a shape expanding from an outer periphery end of the flange part 43b, a short cylindrical part 43d having a large diameter and formed to integrally stand up from an upper end of the tapered cylindrical part 43c, and a pressing surface part 43e having a flange shape and integrally extending in the horizontal direction from the short cylindrical part 43d.

The cylindrical part 43a is formed at its center with a rod insertion hole 43f penetrating in the upper and lower direction, and the rod insertion hole 43f is provided with a receiving part 43g to which a step portion 3a' of a tip end of the rod 3a can be contacted, so that a large diameter hole 43f' and a small diameter hole 43f" are continuously formed.

The piston 43 is configured to be moveable in the longitudinal direction of the suspension device 1 by attaching and fixing the tip end of the rod 3a, which is inserted in the rod insertion hole 43f and protrudes to the upper surface of the cylindrical part 43a, of the shock absorber 3 configuring the suspension device 1, to the piston via the nut 4.

The pressing surface part 43e of the piston 43 is positioned in the annular gap 37 between the outer diameter of the inner collar 33 and the inner diameter of the outer collar 35, and is configured to press the diaphragm 11 by a resilient force of the spring 5 of the suspension device 1.

Also, in the first embodiment, the piston 43 is guided so that an inner surface of the short cylindrical part 43d is to be advanced and retreated in the perpendicular direction along the outer diameter of the main body part 33a of the inner collar 33 (in the drawings, the load from the horizontal direction (horizontal load) is received by the inner collar 33).

Also, since a sliding contact area between the piston 43 and the outer diameter of the inner collar 33 is required to be radially positioned, a pillbox structure is adopted.

In the first embodiment, the piston 43 is configured to contact the diaphragm 11 via a pad 45.

The pad 45 has an annular shape having a diameter capable of contacting a lower surface of the pressing area 31 of the diaphragm 11. Although not particularly limited, since the pad is configured to slide between the diaphragm 11 and the piston 43, the pad is preferably formed of a rigid synthetic resin material having an excellent self-lubricating property, for example, polyacetal resin such as Delrin (registered trademark) or the like.

In the meantime, a configuration where the piston 43 is directly contacted to the diaphragm without the pad 45 is also included within the scope of the present invention.

Also, in the first embodiment, the upper surface of the pressing surface part 43e of the piston 43 is integrally formed at a part near an inner diameter thereof with an annular projection 61 continuing in the circumferential direction and protruding upwards in the perpendicular direction. The projection 61 has an outer diameter to which the inner diameter of the pad 45 to contact the upper surface of the pressing surface part 43e of the piston 43 is to be fitted, and is configured to suppress the pad 45 from deviating in the horizontal direction.

The bush 47 has a large-diameter cylindrical part 47a having a cylindrical through-hole 47b in which the cylindrical part 43a of the piston 43 can be inserted, a flange part 47c integrally extending outwards in the horizontal direction from an upper end of the large-diameter cylindrical part 47a, an annular engaging piece 47d protruding outwards in the horizontal direction from an outer peripheral edge of the flange part 47c, and an annular wall part 47e protruding upwards in the perpendicular direction from an upper surface of the flange part 47c. The large-diameter cylindrical part 47a has opened upper and lower surfaces. One end (upper end) 5a of the coil spring 5 configuring the suspension device 1 is butted to a lower surface of the flange part 47c in the perpendicular direction (refer to FIG. 1).

In the first embodiment, the bush 47 is integrally provided for the mounting part 7 via a stopper part 49.

The stopper part 49 is adopted so as to improve the mounting operability to the suspension device 1. In the first embodiment, the stopper part has an annular mounting part 49a having a circle ring shape of which an outer diameter is the same as the outer collar 35 and an inner diameter is slightly greater than the cylindrical hanging part 35c protruding from the lower surface of the outer collar 35 and the cylindrical hanging part can be thus loosely fitted thereto or is the same as the cylindrical hanging part and the cylindrical hanging part can be thus fitted thereto, a cylindrical part 49b hanging down in the perpendicular direction from the inner diameter of the annular mounting part 49a, and an engaging collar part 49c protruding inwards in the horizontal direction from a lower end of the cylindrical part 49b.

The annular mounting part 49a is formed with bolt insertion holes 49d arranged coaxially in the perpendicular direction with the bolt insertion holes 35e of the outer collar 35 and the bolt fixing holes 7h of the mounting part 7.

Therefore, when the bolt insertion holes 49d of the stopper part 49 are arranged to coaxially communicate with the bolt insertion holes 35e of the outer collar 35 and the bolt fixing holes 7h of the mounting part 7, which are then fastened with the coupling bolts 17, the engaging collar part 49c is engaged with the engaging piece 47d of the bush 47 so as to receive the same from below in the perpendicular direction, so that it is possible to integrally combine the bush 47 with the mounting part 7.

At this time, the cylindrical hanging part 35c of the outer collar 35 is accommodated in an annular gap 51 formed between the outer surface of the annular wall part 47e of the bush 47 and the inner surface of the stopper part 49.

Also, when the stopper part 49 is mounted, predetermined gaps 53, 55 are formed between an upper end surface of the annular wall part 47e of the bush 47 and a lower surface of the main body part 35a of the outer collar 35 and between an upper surface of the engaging piece 47d of the bush 47 and a lower end surface of the cylindrical hanging part 35c of the outer collar 35, respectively. The bush 47 can move in the perpendicular direction within ranges of the gaps 53, 55.

The bearing device 57 is configured to relatively rotate with being interposed between a lower surface of the pressing surface part 43e of the piston 43 and an upper surface of the flange part 47c of the bush 47, and in the first embodiment, a thrust angular ball bearing having an outer ring 57a, an inner ring 57b, a plurality of rolling elements (balls) 57c incorporated between the outer ring 57a and the inner ring 57b and a retainer 57d configured to hold and guide the rolling elements 57c is adopted. In the meantime, the inner ring 57b of the bearing device 57 is fitted to the inner surface of the annular wall part 47e of the bush 47.

Since an axis of the shock absorber 3 and an axis of the spring 5 of the suspension device 1 are offset, a spring input becomes moment. Therefore, since moment load is applied, the thrust angular ball bearing is adopted. Also, in the first embodiment, a contact surface between the piston 43 (the pad) and the diaphragm 11 is arranged so that an extension line in a contact angle direction of the thrust angular ball bearing (bearing device) 57 is to pass therethrough. That is, since an input of the spring 5 and a contact angle of the thrust angular ball bearing (bearing device) 57 are selected so that a load applying line of a bearing is to ride on a load applying line of the diaphragm 11, it is possible to keep the stiffness high.

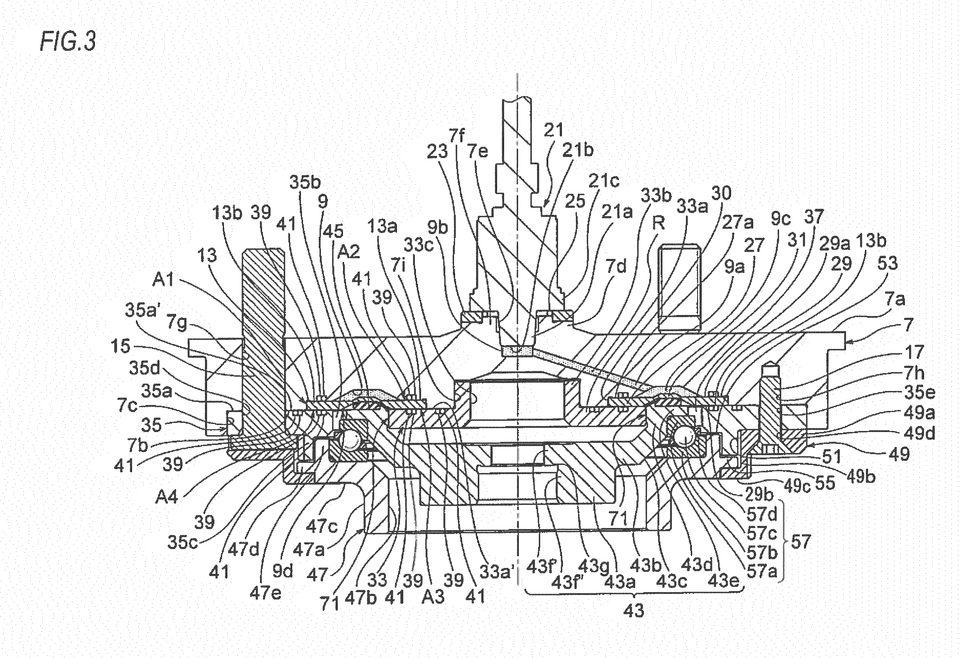

The lubricant holding part 71 is formed in the sliding contact area between the inner surface of the short cylindrical part 43d of the piston 43 and the outer diameter of the main body part 33a of the inner collar 33 (refer to FIGS. 3 to 5).

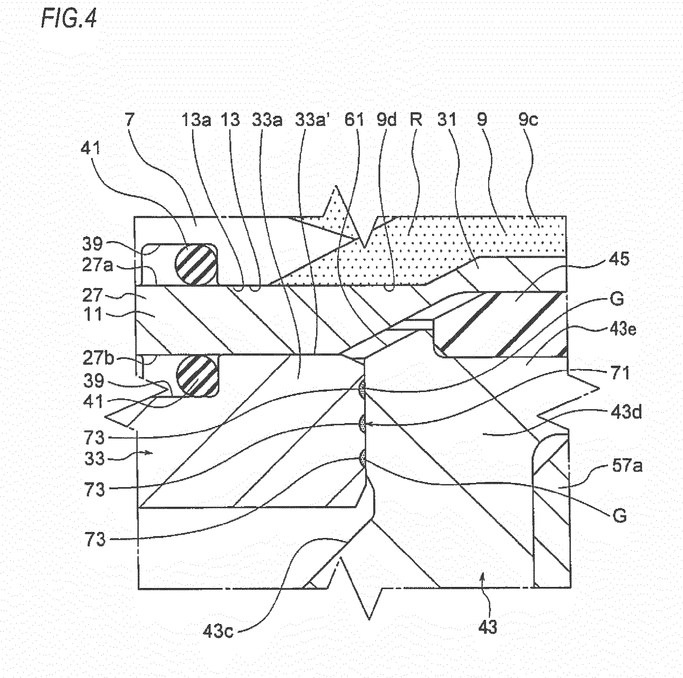

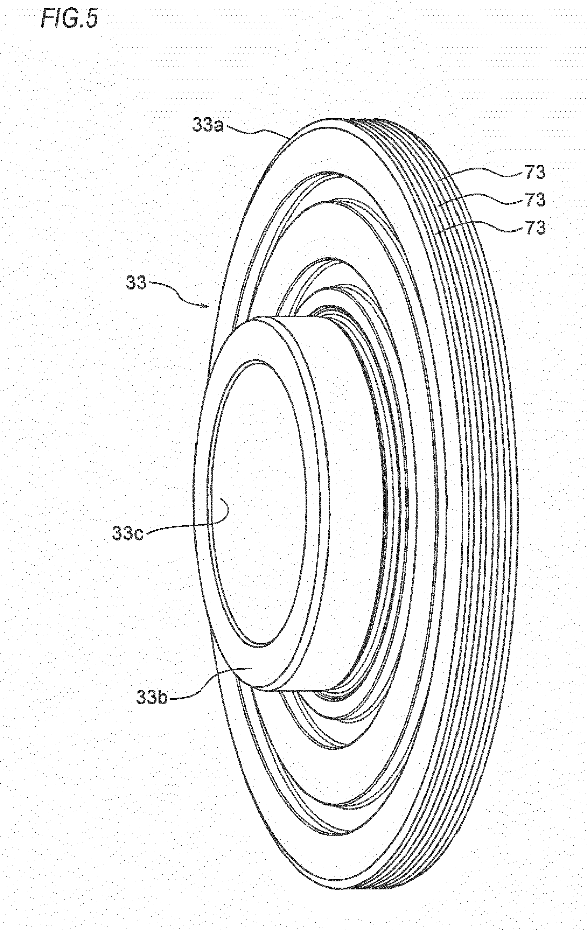

In the first embodiment, the outer diameter of the main body part 33a of the inner collar 33 is formed with three lines of individual circumferential grooves 73 and lubricant G such as grease is sealed in the respective circumferential grooves 73, so that the lubricant holding part 71 is configured by the sliding contact area with the inner surface of the short cylindrical part 43d of the piston 43 (refer to FIGS. 4 and 5). In the first embodiment, the circumferential groove 73 has a dome shape (hemisphere shape), as seen from a section, and opens towards the outer diameter of the main body part 33 (refer to FIG. 4).

Therefore, the lubricant (grease) G sealed and held in the circumferential grooves 73 is infiltrated from the respective openings of the circumferential grooves to the sliding contact area between the outer diameter of the main body part 33a and the inner surface of the short cylindrical part 43d of the piston 43, thereby improving the lubricating property. Therefore, even when a force in an axial direction (the perpendicular direction) from the coil spring 5 of the suspension device (suspension) 1 and a force from the horizontal direction are applied, since the lubricating property is improved, as described above, there are no concerns that fretting wear (fine vibration wear) and the like are to occur. Also, it is possible to reduce axial friction of the piston.

In the meantime, the circumferential groove 73 may be configured by one line of the circumferential groove or two lines or four lines of individual circumferential grooves. Also, the sectional shape of the groove is arbitrary, and a width, depth and the like of the groove are also arbitrary, which can be design-changed within the scope of the present invention. Also, when a plurality of lines of grooves is formed, the shapes (groove width/groove depth/groove length and the like) of the respective grooves may be made different.

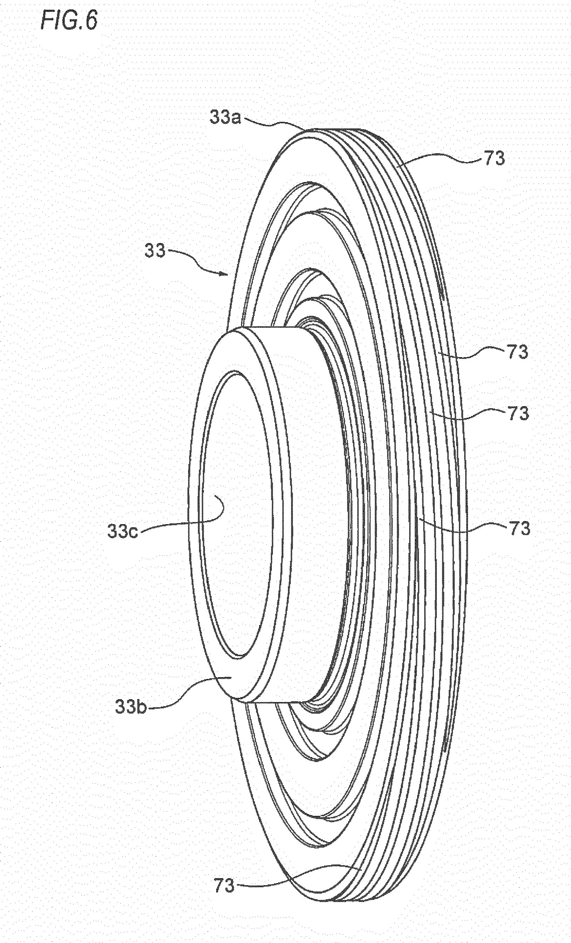

FIG. 6 depicts another embodiment of the inner collar 33, which is different from the embodiment shown in FIGS. 1 to 5, in that the grooves configuring the lubricant holding part 71 are configured by five lines of individual spiral grooves 73.

Also, the spiral groove 73 may be arbitrarily configured. That is, the spiral groove may be configured by one line of spiral continuous groove or a plurality of lines (except for the five lines) of spiral grooves. Also, when a plurality of lines of spiral grooves is provided, the shapes (groove width/groove depth/groove length and the like) of the respective spiral grooves may be made different. The other configurations and effects are the same as the embodiment shown in FIGS. 1 to 5.

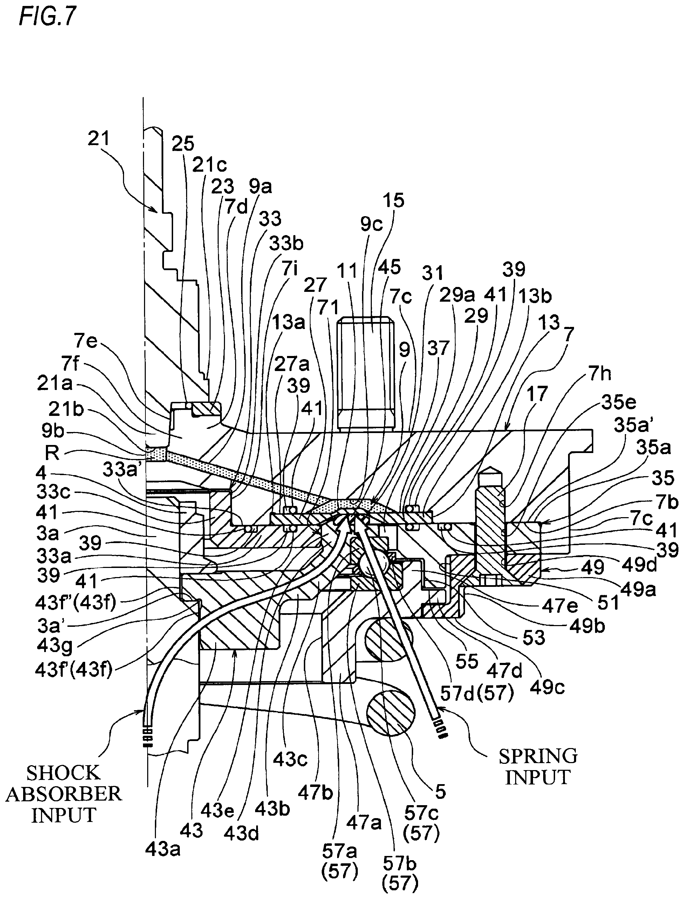

FIG. 7 depicts a load transmission path of the first embodiment.

According to the first embodiment, an input load of the spring 5 is transmitted to the thrust angular ball bearing (the bearing device) 57 with the bush 47 being interposed therebetween, pushes the piston 43 and is transmitted to the diaphragm 11 via the pad 45, and an input load of the shock absorber 3 is transmitted from the piston 43 to the diaphragm 11 via the pad 45, so that the pressing area 31 of the diaphragm 11 is pressed and deformed upwards in the perpendicular direction. Therefore, a pressure in the oil chamber 9 is increased (refer to FIG. 7). A change in pressure increase can be measured by the pressure sensor 21.

Therefore, since the contact surface between the piston 43 and the diaphragm 11 is arranged so that the extension line in the contact angle direction of the thrust angular ball bearing 57 is to pass therethrough, it is possible to measure the load of the spring 5 and the load applied to the shock absorber 3 in the suspension device.

Since there is a proportional relation between the pressure in the oil chamber 9 and the axial load, it is possible to measure a load in a compression direction (the same direction as the perpendicular direction denoted with the arrow 100 in the drawings) to be applied to the suspension device 1 by measuring a change in pressure of the oil chamber 9 with the pressure sensor 21. In addition, it is possible to check the measured data (result) by a digital display screen or the like arranged in the vehicle.

By the above configuration, it is possible to provide the vehicle weight measurement device having the simple, inexpensive and durable structure capable of detecting the load in the compression direction and to prevent the overloading of the vehicle.

Also, in the first embodiment, in addition to the sealing structures by the respective surface seals of the hermetical fixing areas A1, A2 between the upper surface part 27a of the first sealing area 27 and the upper surface part 29a of the second sealing area 29 of the diaphragm 11 and the lower surface (the inner surface part 13a and the outer surface part 13b of the diaphragm accommodating concave portion 13) of the mounting part 7, the hermetical fixing area A3 between the lower surface part 27b of the first sealing area 27 of the diaphragm 11 and the upper surface 33a' of the inner collar 33, and the hermetical fixing area A4 between the lower surface part 29b of the second sealing area 29 and the upper surface 35a' of the outer collar 35, the O-rings 41 are compressed and seal between the oil chamber and the upper surface part 27a of the first sealing area 27 and the upper surface part 29a of the second sealing area 29, so that it is possible to sufficiently prevent the fluid to be measured R from being leaked from the oil chamber 9.

Also, according to the first embodiment, the upper surface 33a' of the inner collar 33 and the upper surface 35a' of the outer collar 35 are respectively provided with the two different annular seal grooves 39 having large and small diameters, and the O-rings 41 are inserted to the respective seal grooves 39, so that the respective O-rings 41 are compressed and seal between the inner collar and the lower surface part 27b of the first sealing area 27 and lower surface part 29b of the second sealing area 29 and between the outer collar and the lower surface 7b of the mounting part 7. Therefore, even if the fluid to be measured R is leaked from the sealing structures of the first sealing area 27 and the second sealing area 29, it is possible to prevent the fluid to be measured R from being leaked by the severalfold sealing structure areas, so that it is possible to securely prevent the fluid to be measured R from being leaked from the oil chamber 9. Therefore, it is possible to extremely improve the sealing reliability.

Also, in the first embodiment, since the sealing structure is provided in the areas in which the relative movement is not to occur, as described above, the seal durability is also high.

Also, according to the first embodiment, the pressure sensor 21 configured to measure the increase in pressure of the fluid to be measured R in the oil chamber 9 is provided for the upper surface 7a of the mounting part 7 to be mounted and fixed to the vehicle-side. Thereby, it is possible to suppress an increase in thickness of the mounting part 7 in the perpendicular direction, which does not restrain a stroke amount of the spring 5.

### "Second Embodiment"

FIGS. 8A and 8B depict a second embodiment of the present invention.

In the first embodiment, the outer diameter of the inner collar 33, which configures the sliding contact area together with the piston 43, is provided with the circumferential grooves 73, so that the lubricant holding part 71 is configured between the outer diameter of the inner collar and the inner diameter of the piston 43. However, in the second embodiment, an inner surface (guide surface) of the short cylindrical part 43d of the piston 43 is formed with the circumferential grooves 73, so that the lubricant holding part 71 is configured by the sliding contact area with the outer diameter of the inner collar 33. In the second embodiment, three lines of the circumferential grooves 73 are formed to configure the lubricant holding part 71.

In the meantime, the circumferential grooves may be configured by one line of a circumferential groove or two lines or four lines or more of individual circumferential grooves. Also, the spiral grooves may be provided to configure the lubricant holding part, which is included within the scope of the present invention. Also in this case, the spiral grooves may be configured by one line of a spiral groove or a plurality of lines spiral grooves.

Since the other configurations and effects are the same as the first embodiment, the same parts are denoted with the same reference numerals and the descriptions thereof are omitted.

### "Third Embodiment"

FIGS. 9 to 14 depict a third embodiment of the present invention.

In the third embodiment, instead of the fitting hole 7i recessed at the central area of the lower surface 7b of the mounting part 7 of the first embodiment, a nut part 60 is integrally formed so that the tip end of the rod 3a can be directly fastened thereto.

Also, regarding the piston, the piston 43 having the above-described configuration is not adopted, and the outer ring 57a configuring the bearing device 57 is configured to double as the piston. In the third embodiment, the lubricant holding part 71 is formed in the sliding contact area between the outer ring 57a and the inner collar 33 (refer to FIGS. 9 to 12).

As the bearing device 57, the thrust angular ball bearing (the bearing device) 57 is adopted, like the first embodiment. However, in the third embodiment, the outer ring 57a doubling as the piston is configured as follows.

The outer ring 57a is accommodated in the annular gap 37 formed between the outer diameter of the main body part 33a of the inner collar 33 and the inner diameter of the main body part 35a of the outer collar 35, is formed to have a thick annular shape capable of moving in the perpendicular direction, has a thickness in the perpendicular direction and a width in the horizontal direction greater than the inner ring 57b, and is configured to be guided with the inner diameter-side thereof being slidingly contacted to the outer diameter of the inner collar 33.

Also, in the third embodiment, the upper surface of the outer ring 57a is integrally formed at a part near the inner diameter thereof with an annular projection 61 continuing in the circumferential direction and protruding upwards in the perpendicular direction.

The projection 61 has an outer diameter to which the inner diameter of the pad 45 to contact the upper surface of the outer ring 57a is to be fitted, and is configured to suppress the pad 45 from deviating in the horizontal direction.

According to the third embodiment, the outer ring 57a is configured to function as the piston configured to move in the compression direction (the same direction as the perpendicular direction denoted with the arrow 100 in the drawings). Thereby, when the bearing is applied with the load in the compression direction (the same direction as the perpendicular direction denoted with the arrow 100 in the drawings), the outer ring (piston) 57a is moved in the perpendicular direction to press the diaphragm 11 via the pad 45, so that the pressure in the oil chamber 9 increases. That is, according to the third embodiment, the load from the coil spring 5 is input and can be measured.

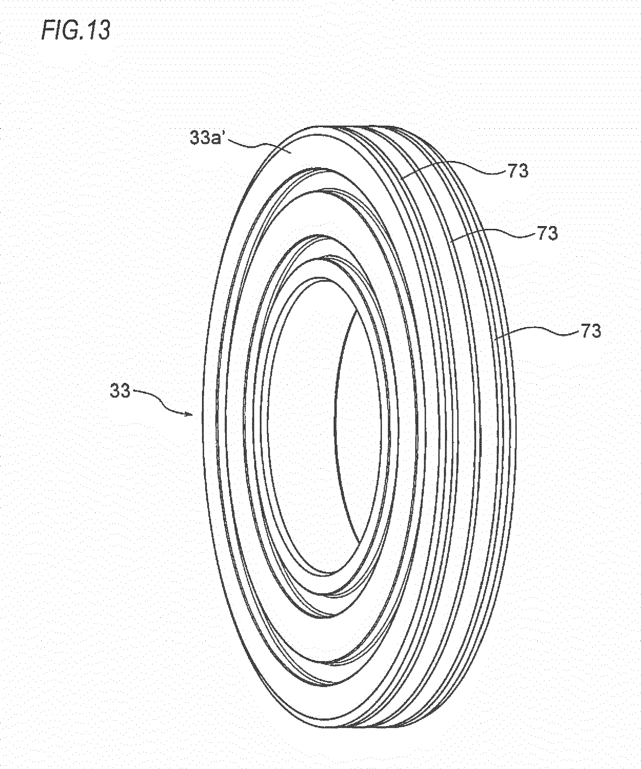

In the third embodiment, the outer diameter of the inner collar 33 is provided with the circumferential grooves 73, and the lubricant holding part 71 is configured by the sliding contact area with the inner surface of the outer ring 57a configured to function as the piston. In the third embodiment, the three lines of individual circumferential grooves 73 are provided to configure the lubricant holding part 71 (refer to FIG. 13).

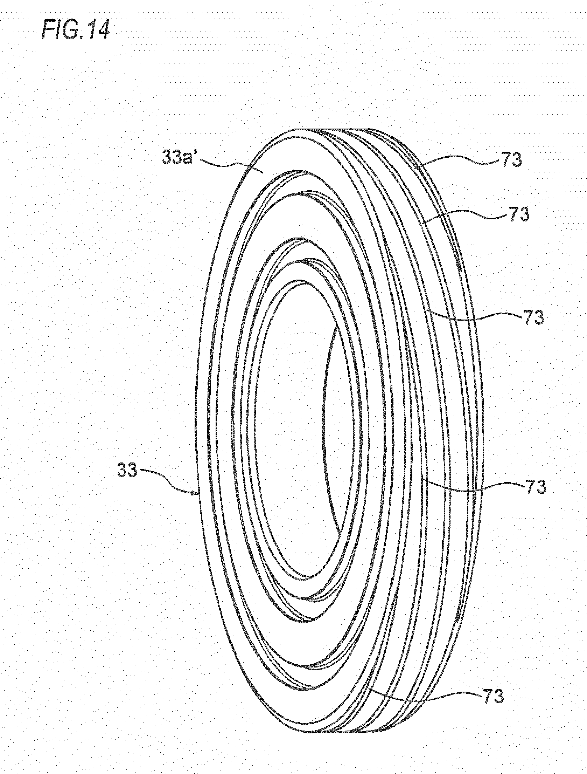

In the meantime, the grooves 73 may be configured by one line of a circumferential groove or two lines or four lines or more of circumferential grooves. Also, the grooves 73 may configure the lubricant holding part 71, as spiral grooves, which is also included within the scope of the present invention. Also in this case, the spiral grooves may be configured by one line of a spiral groove or a plurality of lines spiral grooves. FIG. 14 depicts an example of the third embodiment, in which five lines of individual spiral grooves 73 are adopted.

Since the other configurations and effects are the same as the first embodiment, the descriptions thereof are omitted.

### "Fourth Embodiment"

FIGS. 15A to 16B depict a fourth embodiment of the present invention.

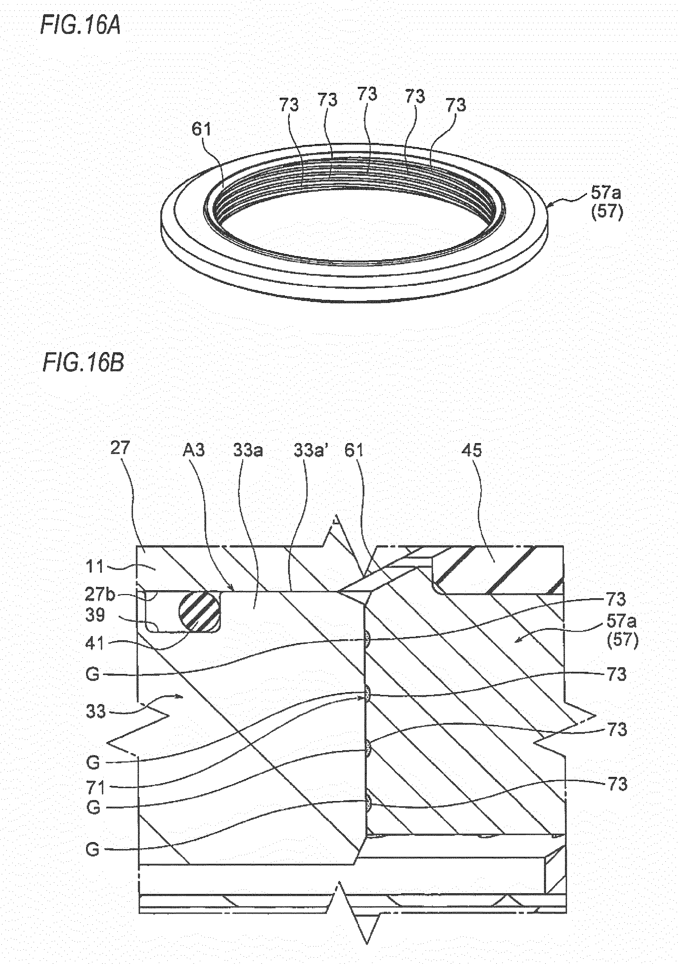

Like the third embodiment, in the fourth embodiment, the lubricant holding part 71 is formed in the sliding contact area between the outer ring 57a and the inner collar 33. However, in the fourth embodiment, the grooves 73 are formed on the inner diameter of the outer ring 57a. As shown in FIGS. 15A and 15B, the grooves 73 are configured by three lines of individual circumferential grooves. Also, FIGS. 16A and 16B depict another embodiment of the outer ring 57a, which is different from FIGS. 15A and 15B, in that the grooves configuring the lubricant holding part 71 are configured by five lines of individual circumferential grooves 73. In the meantime, the shapes (groove width/groove depth/groove length and the like) of the respective grooves may be made different.

Also, the grooves 73 configuring the lubricant holding part 71 may be arbitrarily configured. That is, the grooves may be configured by one line of spiral groove or a plurality of lines of spiral grooves. Also, when a plurality of lines of spiral grooves is provided, the shapes (groove width/groove depth/groove length and the like) of the respective spiral grooves may be made different.

Since the other configurations and effects are the same as the first to third embodiments, the same parts are denoted with the same reference numerals and the descriptions thereof are omitted.

### "Fifth Embodiment"

FIG. 17 depicts a fifth embodiment.

In the fifth embodiment, like the third embodiment and the fourth embodiment, the lubricant holding part 71 is formed in the sliding contact area between the outer ring 57a and the inner collar 33. However, in the fifth embodiment, the grooves 73 are formed not only on the inner diameter of the outer ring 57a but also on the outer diameter of the inner collar 33, and the lubricant (grease) G is provided in the respective grooves 73.

In the fifth embodiment, three lines of individual circumferential grooves 73 are provided to configure the lubricant holding part 71. The respective circumferential grooves 73 adopt the same shape (the same groove width W).

Also, in the fifth embodiment, a guide surface S1 formed between the grooves 73 provided on the inner diameter of the outer ring 57a and a guide surface S2 formed between the grooves 73 provided on the outer diameter of the inner collar 33 are made to have different widths.

That is, in the fifth embodiment, the guide surfaces are configured to satisfy a relation of S1<S2. In the meantime, in the fifth embodiment, the openings of some circumferential grooves 73 of the outer ring 57a-side and some circumferential grooves 73 of the inner collar 33-side are configured to face and communicate each other (in FIG. 17, the circumferential grooves 73 near the lower surfaces of the outer ring 57a and the inner collar 33 communicate with each other).

Since the other configurations and effects are the same as the first to fourth embodiments, the same parts are denoted with the same reference numerals and the descriptions thereof are omitted.

### "Sixth Embodiment"

FIGS. 18 and 19 depict a sixth embodiment.

In the sixth embodiment, like the first embodiment, the lubricant holding part 71 is formed on the sliding contact surface between the inner surface (guide surface) of the short cylindrical part 43d of the piston 43 and the outer diameter of the inner collar 33. However, in the sixth embodiment, the five lines of individual spiral grooves 73 capable of holding therein the lubricant (grease) G are provided both on the inner surface (guide surface) of the short cylindrical part 43d of the piston 43 and the outer diameter of the inner collar 33, so that the lubricant holding part 71 is configured. Also, torsion directions of the spiral grooves 73 provided on the inner surface (guide surface) of the short cylindrical part 43d of the piston 43 and the outer diameter of the inner collar 33 are formed to be different.

In this way, the torsion directions of the spiral grooves 73 provided on the inner diameter of the outer ring 57a and the outer diameter of the inner collar 33 are made in the opposite directions, so that there is no concern that the grooves may enter each other.

The respective spiral grooves 73 may be configured by one line of continuous spiral groove or a plurality of lines of individual spiral grooves, and can be design-changed within the scope of the present invention.

Since the other configurations and effects are the same as the first to fifth embodiments, the same parts are denoted with the same reference numerals and the descriptions thereof are omitted.

### "Seventh Embodiment"

FIGS. 20 to 26C depict a seventh embodiment of the present invention.

In the seventh embodiment, like the first to sixth embodiments, the piston 43 is contacted to the diaphragm 11 via the pad 45, so that the piston 43 can press the diaphragm 11 via the pad 45. However, the seventh embodiment has a feature that at least a part of the sliding contact area 45a of the pad 45 with the diaphragm 11 is provided with the lubricating unit.

Since the other configurations and effects are the same as the first to sixth embodiments, the same parts are denoted with the same reference numerals and the descriptions thereof are omitted.

The pad 45 is formed to have an annular shape having a diameter capable of contacting the lower surface of the pressing area 31 of the diaphragm 11. Therefore, while the diaphragm 11 is repeatedly deformed by the sliding contact area 45a of the pad 45, the fretting wear (fine vibration wear) is caused on the lower surface of the pressing area 31 of the diaphragm 11, the corresponding wear becomes a cause of the breakage of the diaphragm 11 and the deformation precision of the diaphragm 11 is deteriorated, so that the measurement precision is lowered.

For this reason, in the seventh embodiment, the pad 45 has a configuration where one line of an annular groove 46 continuing in the circumferential direction and opening towards the lower surface of the pressing area 31 of the diaphragm 11 is provided in the sliding contact area 45a with the diaphragm 11 and the lubricant G such as grease is filled in the groove 46, so that the lubricating unit is configured (refer to FIGS. 20 to 24).

Also, the groove 46 is provided in the sliding contact area 45a of the pad 45 with the diaphragm 11.

That is, since the pad 45 is always applied with the pressure towards the diaphragm 11, the sliding contact area 45a of the pad 45 with the diaphragm 11 and the lower surface of the pressing area 31 of the diaphragm 11 are closely contacted. For this reason, when the groove 46 is provided in the sliding contact area 45a of the pad 45 with the diaphragm 11 (the groove 46 is not opened towards the outer diameter of the pad 45), the lubricant (grease) G filled in the groove 46 is not leaked from the sliding contact surface between the pad 45 and the lower surface of the pressing area 31 of the diaphragm 11.

Therefore, the lubricant (grease) G filled and held in the groove 46 is infiltrated from the opening (which faces towards the pressing area 31 of the diaphragm 11) of the groove 46 to the sliding contact area 45a of the pad 45, thereby improving the lubricating property with the lower surface of the pressing area 31 of the diaphragm 11. Therefore, even when the diaphragm 11 is repeatedly deformed by the sliding contact area 45a of the pad 45, since the lubricating property is improved, as described above, there are no concerns that fretting wear and the like are to occur. Also, it is possible to prevent the measurement precision from being lowered.

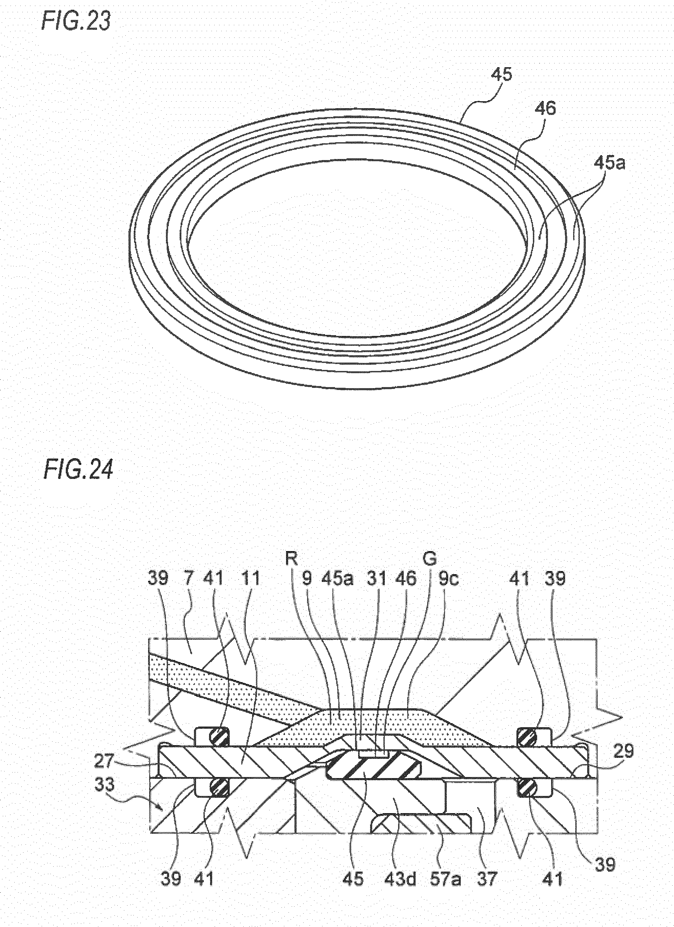

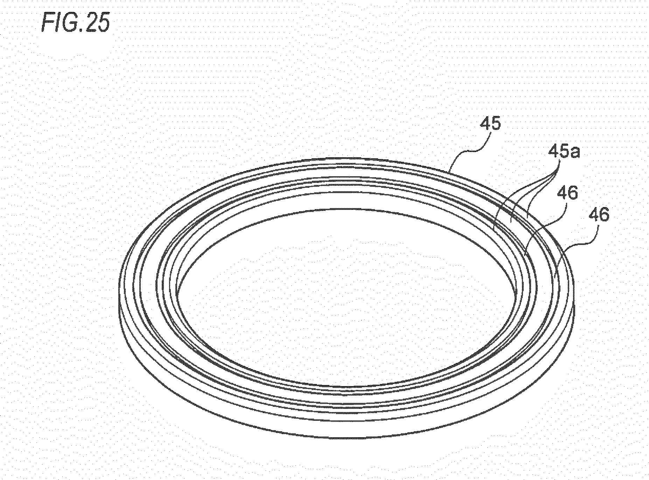

Also, in the seventh embodiment, the groove 46 provided at the pad 45 is configured by one line of the annular groove (refer to FIGS. 23 and 24). However, the groove 46 may also be configured by a plurality of annular grooves. For example, as shown in FIG. 25, two lines of annular grooves may be configured by an annular groove 46 having a large diameter and an annular groove 46 having a small diameter. Alternatively, the groove may be configured by more lines of annular grooves.

When the pad 45 has a plurality of lines of annular grooves 46, an amount of the lubricant (grease) G that can be filled in the annular grooves 46 increases. Therefore, it is possible to favorably hold the lubricating performance between the pad 45 and the lower surface of the pressing area 31 of the diaphragm 11 for a long time.

Also in this case, like the above-described cases, all the grooves 46 are provided in the sliding contact area 45a of the pad 45 with the diaphragm 11. Thereby, it is possible to prevent the lubricant (grease) G from being leaked from the sliding contact surface between the pad 45 and the lower surface of the pressing area 31 of the diaphragm 11.

In the meantime, the plurality of lines of annular grooves 46 may be formed so that parts of the grooves are to be connected (which is not shown). When parts of the grooves are connected, since the lubricant (grease) G is shared between the plurality of annular grooves 46, the lubricant (grease) G is equally consumed between the annular grooves 46. Thereby, it is possible to equalize the lubricating performance of the entire sliding contact area 45a of the pad 45 with the diaphragm 11 for a long time and to keep the favorable lubricating state.

Also, in the seventh embodiment, the groove 46 provided for the pad 45 is formed as the annular groove continuing in the circumferential direction. However, as shown in FIG. 26, instead of the configuration where the groove 46 is continuous in the circumferential direction, the groove may be configured by a group of grooves intermittently arranged in the circumferential direction. For example, a plurality of circular arc-shaped long grooves 46a (46) may be arranged in one line of groove group in the circumferential direction (FIG. 26A), two lines of groove groups may be arranged by circular arc-shaped long grooves 46b (46) having a large diameter and becoming a groove group in the circumferential direction and circular arc-shaped long grooves 46c (46) having a small diameter and becoming a groove group in the circumferential direction (FIG. 26B) or a plurality of circular grooves 46d (46) may be arranged in a groove group in the circumferential direction (FIG. 26C).

Also in the cases, the lubricant G such as grease is filled in each groove, so that it is possible to favorably keep the lubricating performance between the pad 45 and the lower surface of the pressing area 31 of the diaphragm 11.

In the meantime, also in the cases, in order to prevent the lubricant (grease) G from being leaked from the sliding contact surface between the pad 45 and the lower surface of the pressing area 31 of the diaphragm 11, all the grooves 46 (the long grooves 46a, the circular arc-shaped long grooves 46b, the circular arc-shaped long grooves 46c, the circular grooves 46d) are provided in the sliding contact area 45a of the pad 45 with the diaphragm 11, like the above-described cases.

Also, in the seventh embodiment, the example of the grooves 46 provided for the pad 45 has been described. However, the shape, number and arrangement of the grooves 46 are not limited thereto, and can be freely set in accordance with requests upon the design, inasmuch as the grooves are provided in the sliding contact area 45a of the pad 45 with the diaphragm 11, the lubricant G such as grease can be filled in the respective grooves, and the lubricating performance between the pad 45 and the lower surface of the pressing area 31 of the diaphragm 11 can be favorably kept.

### "Eighth Embodiment"

FIGS. 27A to 27C depict an eighth embodiment of the present invention.

In the first to seventh embodiments, the diaphragm 11 and the pad 45 are formed to have the annular shapes to avoid the cylindrical protrusion 33b of the inner collar 33. However, when the upper surface of the main body part 33a of the inner collar 33 is formed as a flat circular surface, the diaphragm 11 may be formed to have a circular disc shape (having no hole at the center) and may be combined with the pad 45 having a circular disc shape (having no hole at the center).

In this case, since the sliding contact area 45a of the pad 45 with the diaphragm 11 has a circular shape, the grooves 46 configuring the lubricating unit, which have been described in the seventh embodiment, can be arranged over the entire area 45a (refer to FIGS. 27A to 27C). For example, a plurality of annular grooves 46e (46) may be concentrically arranged in the area 45a (FIG. 27A), a plurality of circular grooves 46f (46) may be arranged at a center of area 45a and in a circle ring shape (FIG. 27B), or a plurality of long grooves 46g (46) may be radially arranged in the area 45a (FIG. 27 C).

Also in the cases, in order to prevent the lubricant (grease) G from being leaked from the sliding contact surface between the pad 45 and the lower surface of the pressing area 31 of the diaphragm 11, all the grooves 46 (the circle ring-shaped grooves 46e, the circular grooves 46f, the long grooves 46g radially arranged) are provided in the sliding contact area 45a of the pad 45 with the diaphragm 11, like the seventh embodiment.

Also, in the eighth embodiment, the example of the grooves 46 provided for the pad 45 has been described. However, the shape, number and arrangement of the grooves 46 are not limited thereto, and can be freely set in accordance with requests upon the design, inasmuch as the grooves are provided in the sliding contact area 45a of the pad 45 with the diaphragm 11, the lubricant G such as grease can be filled in the respective grooves, and the lubricating performance between the pad 45 and the lower surface of the pressing area 31 of the diaphragm 11 can be favorably kept.

Also, in the eighth embodiment, the respective grooves 46 (the circle ring-shaped grooves 46e, the circular grooves 46f, the long grooves 46g radially arranged) are individually provided. However, the grooves adjacent to each other may be connected.

Since the other configurations and effects are the same as the first to seventh embodiments, the same parts are denoted with the same reference numerals and the descriptions thereof are omitted.

### Industrial Applicability

The present invention can also be applied to suspension devices having the other configurations, irrespective of the suspension device having the configurations described in the embodiments. Also, the present invention can be used for a configuration where when the outer diameter of the piston is guided with sliding contacting the inner diameter of the outer collar, the lubricant holding part is formed on the sliding contact surface between the outer diameter of the piston and the inner diameter of the outer collar.

### Description of Reference Numerals

- 1:: suspension device
- 3:: shock absorber
- 5:: coil spring
- 7:: mounting part
- 7d:: sensor coupling part
- 9:: oil chamber
- 9c:: groove portion
- 11:: diaphragm
- 21:: pressure sensor
- 33:: inner collar
- 35:: outer collar
- 43:: piston
- 47:: bush
- 57:: bearing device

## Claims

1. A vehicle weight measurement device provided at a suspension device (1) and comprising:
a mounting part (7) of which an upper surface-side is fixed to a vehicle-side and a lower surface-side is provided with a groove portion (9c) opening in an annular shape,
an annular diaphragm (11) configured to cover an opening area of the groove portion (9c) and to form an oil chamber (9) of a predetermined space together with the groove portion (9c),
an annular inner collar (33) configured to sandwich and hermetically fix a surface part near an inner diameter of the diaphragm (11) between the inner collar (33) and an inner surface part of the opening area of the groove portion (9c),
an annular outer collar (35) having a diameter greater than an outer diameter of the opening area of the groove portion (9c) and configured to sandwich and hermetically fix a surface part near an outer diameter of the diaphragm (11) between the outer collar (35) and an outer surface part of the opening area of the groove portion (9c),
a piston (43) provided to be moveable in a longitudinal direction of the suspension device (1) between an outer diameter of the inner collar (33) and an inner diameter of the outer collar (35) and configured to press the diaphragm (11) by a resilient force of a spring (5) of the suspension device (1),
a bush (47) configured to receive one end of the spring (5), and
a bearing device (57) interposed between the piston (43) and the bush (47) and configured to be relatively rotatable,
wherein the oil chamber (9) is filled with a predetermined fluid to be measured and a pressure of the fluid to be measured, which is to be applied by movement of the piston (43), is changeable, and
wherein the vehicle weight measurement device comprises a pressure sensor (21) configured to communicate with the oil chamber (9) and to detect a change in pressure of the fluid to be measured filled in the oil chamber (9),
**characterized in that**
the bearing device (57) is a thrust angular ball bearing (57) interposed between the piston (43) and the bush (47) and configured to be relatively rotatable,
wherein a contact surface between the piston (43) and the diaphragm (11) is arranged so that an extension line in a contact angle direction of the thrust angular ball bearing (57) passes therethrough.

2. The vehicle weight measurement device according to claim 1, **characterized in that**
a seal member is provided in a hermetical fixing area between the diaphragm (11) and a lower surface (7b) of the mounting part (7).

3. The vehicle weight measurement device according to claim 2, **characterized in that**
the seal member is provided in a hermetical fixing area between the diaphragm (11) and the inner collar (33), a hermetical fixing area between the diaphragm (11) and the outer collar (35), and contact areas between the inner collar (33) and outer collar (35) and the lower surface (7b) of the mounting part (7), respectively.

4. The vehicle weight measurement device according to any one of claims 1 to 3, **characterized in that**
the piston (43) is configured to contact the diaphragm (11) via a pad (45).

5. The vehicle weight measurement device according to any one of claims 1 to 4, **characterized in that**
the bush (47) is integrally provided for the mounting part (7) via a stopper part.

6. The vehicle weight measurement device according to any one of claims 1 to 5, **characterized in that**
an upper surface (7a) of the mounting part (7) facing the vehicle-side is formed with a sensor coupling part (7d) configured to communicate with the oil chamber (9),
wherein the pressure sensor (21) is provided at the sensor coupling part (7d).

7. The vehicle weight measurement device according to any one of claims 1 to 6, **characterized in that**
an outer ring configuring the bearing device (57) is configured to double as the piston (43).

8. The vehicle weight measurement device according to any one of claims 1 to 7, **characterized in that**
a tip end of a piston rod of the suspension device (1) is mounted to a lower surface of the mounting part (7).

9. The vehicle weight measurement device according to any one of claims 1 to 8, **characterized in that**
the piston (43) is arranged so that it can be guided with sliding contacting at least one of the inner collar (33) and the outer collar (35),
wherein the sliding contact area is provided with a lubricant holding part (71) configured to hold lubricant.

10. The vehicle weight measurement device according to any one of claims 1 to 9, **characterized in**
**that** a pad (45) arranged with sliding contacting the diaphragm (11) is interposed between the piston (43) and the diaphragm (11),
**that** the piston (43) is configured to press the diaphragm (11) via the pad (45), and
**that** the pad (45) has a lubricating unit in at least a part of the sliding contact area with the diaphragm (11).

11. The vehicle weight measurement device according to claim 10, **characterized in that**
the lubricating unit comprises a groove (46) provided in the sliding contact area with the diaphragm (11) and lubricant filled in the groove (46).

## Patentansprüche

1. Vorrichtung zur Messung des Gewichtes eines Fahrzeugs, die an einer Aufhängungsvorrichtung (1) vorhanden ist und umfasst:
ein Montageteil (7), dessen Oberseite an einer Fahrzeugseite befestigt ist und dessen Unterseite mit einem Nutabschnitt (9c) versehen ist, der sich ringförmig öffnet,
eine ringförmige Membran (11), die so eingerichtet ist, dass sie einen Öffnungsbereich des Nutabschnitts (9c) abdeckt und zusammen mit dem Nutabschnitt (9c) eine Ölkammer (9) mit einem vorgegebenen Raum bildet,
einen ringförmigen inneren Bund (33), der so eingerichtet ist, dass er einen Oberflächenteil nahe an einem Innendurchmesser der Membran (11) zwischen dem inneren Bund (33) und einem Innenflächenteil des Öffnungsbereiches des Nutabschnitts (9c) einschließt und hermetisch fixiert,
einen ringförmigen äußeren Bund (35), der einen Durchmesser hat, der größer ist als ein Außendurchmesser des Öffnungsbereiches des Nutabschnitts (9c), und so eingerichtet ist, dass er einen Oberflächenteil nahe an einem Außendurchmesser der Membran (11) zwischen dem äußeren Bund (35) und einem Außenflächenteil des Öffnungsbereiches des Nutabschnitts (9c) einschließt und hermetisch fixiert,
einen Kolben (43), der in einer Längsrichtung der Aufhängungsvorrichtung (1) zwischen einem Außendurchmesser des inneren Bundes (33) und einem Innendurchmesser des äußeren Bundes (35) bewegt werden kann und so eingerichtet ist, dass er die Membran (11) mittels einer elastischen Kraft einer Feder (5) der Aufhängungsvorrichtung (1) presst,
eine Buchse (47), die so eingerichtet ist, dass sie ein Ende der Feder (5) aufnimmt, sowie
eine Lagervorrichtung (57), die zwischen dem Kolben (43) und der Buchse (47) angeordnet und so eingerichtet ist, dass sie relativ gedreht werden kann,
wobei die Ölkammer (9) mit einem vorgegebenen zu messenden Fluid gefüllt ist und ein Druck des zu messenden Fluids, der durch Bewegung des Kolbens (43) ausgeübt wird, verändert werden kann, und
die Vorrichtung zur Messung des Gewichtes eines Fahrzeugs einen Drucksensor (21) umfasst, der so eingerichtet ist, dass er mit der Ölkammer (9) in Verbindung steht und eine Änderung von Druck des zu messenden Fluids in der Ölkammer (9) erfasst,
**dadurch gekennzeichnet, dass**
die Lagevorrichtung (57) ein Axial-Schrägkugellager ist, das zwischen den Kolben (43) und die Buchse (47) eingesetzt und so eingerichtet ist, dass es relativ gedreht werden kann,
wobei eine Kontaktfläche zwischen dem Kolben (43) und der Membran (11) so angeordnet ist, dass eine Verlängerungslinie in einer Kontaktwinkel-Richtung des Axial-Schrägkugellagers (57) durch sie hindurch verläuft.

2. Vorrichtung zur Messung des Gewichtes eines Fahrzeugs nach Anspruch 1, **dadurch gekennzeichnet, dass**
ein Dichtungselement in einem Bereich hermetischer Fixierung zwischen der Membran (11) und einer unteren Fläche (7b) des Montageteils (7) vorhanden ist.

3. Vorrichtung zur Messung des Gewichtes eines Fahrzeugs nach Anspruch 2, **dadurch gekennzeichnet, dass**
das Dichtungselement in einem Bereich hermetischer Fixierung zwischen der Membran (11) und dem inneren Bund (33), einem Bereich hermetischer Fixierung zwischen der Membran (11) und dem äußeren Bund (35) und Kontaktbereichen zwischen dem inneren Bund (33) und dem äußeren Bund (35) bzw. der unteren Fläche (7b) des Montageteils (7) vorhanden ist.

4. Vorrichtung zur Messung des Gewichtes eines Fahrzeugs nach einem der Ansprüche 1 bis 3, **dadurch gekennzeichnet, dass**
der Kolben (43) so eingerichtet ist, dass er über eine Auflage (45) mit der Membran (11) in Kontakt ist.

5. Vorrichtung zur Messung des Gewichtes eines Fahrzeugs nach einem der Ansprüche 1 bis 4, **dadurch gekennzeichnet, dass**
die Buchse (47) über ein Anschlagteil integral mit dem Montageteil (7) verbunden ist.

6. Vorrichtung zur Messung des Gewichtes eines Fahrzeugs nach einem der Ansprüche 1 bis 5, **dadurch gekennzeichnet, dass**
eine obere Fläche (7a) des Montageteils (7), die der Fahrzeugseite zugewandt ist, mit einem Sensor-Kopplungsteil (7d) versehen ist, das zum Herstellen von Verbindung mit der Ölkammer (9) eingerichtet ist,
wobei sich der Drucksensor (21) an dem Sensor-Kopplungsteil (7d) befindet.

7. Vorrichtung zur Messung des Gewichtes eines Fahrzeugs nach einem der Ansprüche 1 bis 6, **dadurch gekennzeichnet, dass**
ein äußere Ring, der die Lagervorrichtung (57) bildet, so eingerichtet ist, dass er auch als der Kolben (43) dient.

8. Vorrichtung zur Messung des Gewichtes eines Fahrzeugs nach einem der Ansprüche 1 bis 7, **dadurch gekennzeichnet, dass**
ein vorderes Ende einer Kolbenstange der Aufhängungsvorrichtung (1) an einer unteren Fläche des Montageteils (7) montiert ist.

9. Vorrichtung zur Messung des Gewichtes eines Fahrzeugs nach einem der Ansprüche 1 bis 8, **dadurch gekennzeichnet, dass**
der Kolben (43) so angeordnet ist, dass er so geführt werden kann, dass er gleitend in Kontakt mit dem inneren Bund (33) oder/und dem äußeren Bund (35) ist,
wobei der Gleitkontakt-Bereich mit einem Schmiermittel-Aufnahmeteil (71) versehen ist, das zum Aufnehmen von Schmiermittel eingerichtet ist.

10. Vorrichtung zur Messung des Gewichtes eines Fahrzeugs nach einem der Ansprüche 1 bis 9, **dadurch gekennzeichnet, dass**
eine Auflage (45), die in Gleitkontakt mit der Membran (11) angeordnet ist, sich zwischen den Kolben (43) und die Membran (11) eingesetzt ist,
der Kolben (43) so eingerichtet ist, dass er die Membran (11) über die Auflage (45) presst, und
die Auflage (45) eine Schmier-Einheit in wenigstens einem Teil des Gleitkontakt-Bereiches mit der Membran (11) aufweist.

11. Vorrichtung zur Messung des Gewichtes eines Fahrzeugs nach Anspruch 10, **dadurch gekennzeichnet, dass**
die Schmier-Einheit eine Nut (46), die sich in dem Gleitkontakt-Bereich mit der Membran (11) befindet sowie Schmierstoff umfasst, der in die Nut (46) gefüllt ist.

## Revendications

1. Dispositif de mesure du poids d'un véhicule équipant un dispositif de suspension (1), et comprenant :
une partie de montage (7) dont un côté de surface supérieure est fixé d'un côté véhicule et un côté de surface inférieure est pourvu d'une partie formant rainure (9c) s'ouvrant en forme annulaire,
un diaphragme annulaire (11) configuré pour couvrir une zone d'ouverture de la partie formant rainure (9c) et pour former une chambre à huile (9) d'un volume prédéterminé avec la partie formant rainure (9c),
un collier intérieur annulaire (33) configuré pour prendre en sandwich entre le collier intérieur (33) et une partie de surface intérieure de la zone d'ouverture de la partie formant rainure (9c) une partie de surface proche d'un diamètre intérieur du diaphragme (11) et pour la fixer de manière hermétique,
un collier extérieur annulaire (35) de diamètre supérieur à un diamètre extérieur de la zone d'ouverture de la partie formant rainure (9c) et configuré pour prendre en sandwich entre le collier extérieur (35) et une partie de surface extérieure de la zone d'ouverture de la partie formant rainure (9c) une partie de surface proche d'un diamètre extérieur du diaphragme (11) et pour la fixer de manière hermétique,
un piston (43) conçu pour être mobile dans une direction longitudinale du dispositif de suspension (1) entre un diamètre extérieur du collier intérieur (33) et un diamètre intérieur du collier extérieur (35), et configuré pour presser le diaphragme (11) sous l'effet d'une force élastique d'un ressort (5) du dispositif de suspension (1),
une douille (47) configurée pour recevoir une extrémité du ressort (5), et
un dispositif formant palier (57) intercalé entre le piston (43) et la douille (47) et configuré pour pouvoir effectuer une rotation relative,
dans lequel la chambre à huile (9) est remplie d'un fluide prédéterminé à mesurer et une pression du fluide à mesurer, qui doit être appliquée par le déplacement du piston (43), est variable, et
dans lequel le dispositif de mesure du poids d'un véhicule comprend un capteur de pression (21) configuré pour communiquer avec la chambre à huile (9) et pour détecter une variation de pression du fluide à mesurer contenu dans la chambre à huile (9),
**caractérisé**
**en ce que** le dispositif formant palier (57) est une butée à billes à contact oblique (57) intercalée entre le piston (43) et la douille (47) et configurée pour pouvoir effectuer une rotation relative,
dans lequel une surface de contact entre le piston (43) et le diaphragme (11) est disposée de sorte qu'une ligne de prolongement dans une direction d'angle de contact de la butée à billes à contact oblique (57) passe à travers.

2. Dispositif de mesure du poids d'un véhicule selon la revendication 1, **caractérisé**
**en ce qu'**un élément d'étanchéité est situé dans une zone de fixation hermétique entre le diaphragme (11) et une surface inférieure (7b) de la partie de montage (7).

3. Dispositif de mesure du poids d'un véhicule selon la revendication 2, **caractérisé**
**en ce que** l'élément d'étanchéité est situé dans une zone de fixation hermétique entre le diaphragme (11) et le collier intérieur (33), une zone de fixation hermétique entre le diaphragme (11) et le collier extérieur (35) et des zones de contact entre le collier intérieur (33) et le collier extérieur (35) et la surface inférieure (7b) de la partie de montage (7), respectivement.

4. Dispositif de mesure du poids d'un véhicule selon l'une quelconque des revendications 1 à 3, **caractérisé**
**en ce que** le piston (43) est configuré pour entrer en contact avec le diaphragme (11) par l'intermédiaire d'un coussin (45).

5. Dispositif de mesure du poids d'un véhicule selon l'une quelconque des revendications 1 à 4, **caractérisé**
**en ce que** la douille (47) est conçue pour faire corps avec la partie de montage (7) par l'intermédiaire d'une partie butée.

6. Dispositif de mesure du poids d'un véhicule selon l'une quelconque des revendications 1 à 5, **caractérisé**
**en ce qu'**une surface supérieure (7a) de la partie de montage (7) située face au côté véhicule comporte une partie de couplage de capteur (7d) configurée pour communiquer avec la chambre à huile (9),
dans lequel le capteur de pression (21) se trouve au niveau de la partie de couplage de capteur (7d).

7. Dispositif de mesure du poids d'un véhicule selon l'une quelconque des revendications 1 à 6, **caractérisé**
**en ce qu'**une bague extérieure constituant le dispositif formant palier (57) est configurée pour servir de piston (43).

8. Dispositif de mesure du poids d'un véhicule selon l'une quelconque des revendications 1 à 7, **caractérisé**
**en ce qu'**une extrémité d'une tige de piston du dispositif de suspension (1) est montée sur une surface inférieure de la partie de montage (7).

9. Dispositif de mesure du poids d'un véhicule selon l'une quelconque des revendications 1 à 8, **caractérisé**
**en ce que** le piston (43) est conçu de manière à pouvoir être guidé en contact glissant avec au moins le collier intérieur (33) et/ou le collier extérieur (35),
dans lequel la zone de contact glissant est pourvue d'une partie renfermant un lubrifiant (71) configurée pour contenir un lubrifiant.

10. Dispositif de mesure du poids d'un véhicule selon l'une quelconque des revendications 1 à 9, **caractérisé**
**en ce qu'**un coussin (45) agencé en contact glissant avec le diaphragme (11) est intercalé entre le piston (43) et le diaphragme (11),
**en ce que** le piston (43) est configuré pour presser le diaphragme (11) par l'intermédiaire du coussin (45), et
**en ce que** le coussin (45) comporte une unité de lubrification dans au moins une partie de la zone de contact glissant avec le diaphragme (11).

11. Dispositif de mesure du poids d'un véhicule selon la revendication 10, **caractérisé**
**en ce que** l'unité de lubrification comprend une rainure (46) ménagée dans la zone de contact glissant avec le diaphragme (11) et un lubrifiant qui remplit la rainure (46).
